# EUROPEAN PATENT APPLICATION

(11) **EP 4 557 845 A1**
(43) Date of publication of application: **21.05.2025**
(21) Application number: 23851593.6
(22) Date of filing: 26.07.2023
(51) Int. Cl.: H04W 56/00

(54) **COMMUNICATION METHOD AND RELATED APPARATUS**

(30) Priority: 11.08.2022 CN 202210963748
(71) Applicant: Huawei Technologies Co., Ltd., Shenzhen, Guangdong 518129 (CN)
(72) Inventor: GU, Zhifang, Shenzhen, Guangdong 518129 (CN); YOU, Chunhua, Shenzhen, Guangdong 518129 (CN); FAN, Qiang, Shenzhen, Guangdong 518129 (CN); YUAN, Shitong, Shenzhen, Guangdong 518129 (CN)
(74) Representative: Gill Jennings & Every LLP
(86) International application number: PCT/CN2023/109235
(87) International publication number: WO 2024/032371

(57) **Abstract**

This application provides a communication method and a related apparatus. The method is applicable to a terminal device that has obtained a first TA for communicating with a first TRP. The method includes: The terminal device obtains, from a network device, configuration information of a first resource and information indicating to obtain a TA. The terminal device sends, based on the information indicating to obtain a TA, information used to determine a second TA of a second TRP to the network device by using the first resource. The terminal device receives, from the network device, information indicating the second TA. The second TA is used by the terminal device to communicate with the second TRP. Based on solutions in embodiments of this application, accuracy of uplink sending can be improved.

## Description

This application claims priority to Chinese Patent Application No. 202210963748.6, filed with the China National Intellectual Property Administration on August 11, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In a wireless communication system, a communication service may be provided for a user equipment (user equipment, UE) by a plurality of transmission reception points (transmission reception point, TRP). The plurality of TRPs are a plurality of physically separated antennas or a plurality of antenna arrays on a same antenna, which form multiple TRPs (that is, mTRP), where different spatial channels are formed, and a maximum beamforming gain or a spatial diversity reliability gain is formed based on irrelevancy between spatial channels, to enhance coverage or reliability.

A timing advance (timing advance, TA) is a timing advance used by a UE to send an uplink signal to a network device, that is, the UE determines, based on the TA, a moment for sending the uplink signal. Currently, for mTRP transmission, a plurality of TRPs correspond to a common TA, that is, a UE sends uplink signals to the mTRP based on the common TA. Accuracy of sending an uplink signal in this manner is low.

### SUMMARY

This application provides a communication method and a related apparatus, to improve accuracy of sending an uplink signal.

According to a first aspect, this application provides a communication method. The method is applicable to a terminal device or a chip in a terminal device. The following uses an example in which the terminal device performs the method for description. The terminal device has obtained a first timing advance TA for communicating with a first transmission reception point TRP. The method includes:
The terminal device obtains, from a network device, configuration information of a first resource and information indicating to obtain a TA.

The terminal device sends, based on the information indicating to obtain a TA, information used to determine a second TA of a second TRP to the network device by using the first resource.

The terminal device receives, from the network device, information indicating the second TA. The second TA is used by the terminal device to communicate with the second TRP.

In this application, when the terminal device has obtained the first TA for communicating with the first TRP (that is, the terminal device has performed single-TRP transmission), if the network device determines that the terminal device is suitable for mTRP transmission, the network device may indicate the terminal device to perform mTRP transmission, and indicate the terminal device to obtain the second TA corresponding to the second TRP. After the terminal device obtains the second TA, in subsequent communication, the terminal device can send signals to different TRPs at accurate uplink sending time.

In a possible implementation, that the terminal device obtains, from a network device, configuration information of a first resource and information indicating to obtain a TA includes:
The terminal device obtains a multi-transmission reception point mTRP transmission configuration message from the network device. The mTRP transmission configuration message includes the configuration information of the first resource and the information indicating to obtain a TA.

In this implementation, the network device may deliver, by using one message (that is, the mTRP transmission configuration message), the configuration information of the first resource and the information indicating to obtain a TA, so that signaling overheads can be reduced.

In a possible implementation, that the terminal device obtains, from a network device, configuration information of a first resource and information indicating to obtain a TA includes:
The terminal device obtains a multi-transmission reception point mTRP transmission configuration message from the network device. The mTRP transmission configuration message includes a correspondence between the first resource and the second TRP and the information indicating to obtain a TA, and the correspondence between the first resource and the second TRP includes the configuration information of the first resource and identification information of the second TRP.

The method further includes:
The terminal device determines, based on the correspondence between the first resource and the second TRP, that the second TA corresponds to the second TRP.

In this implementation, the mTRP transmission configuration message includes the correspondence between the first resource and the second TRP, so that the terminal device subsequently determines, based on the correspondence between the first resource and the second TRP, that the subsequently received second TA corresponds to the second TRP.

In a possible implementation, that the terminal device obtains, from a network device, configuration information of a first resource and information indicating to obtain a TA includes:
The terminal device receives a first message from the network device. The first message includes configuration information of one or more resources, and the one or more resources include the first resource.

The terminal device receives a second message from the network device. The second message includes the information indicating to obtain a TA.

In this implementation, the network device may deliver, by using two messages, the configuration information of the first resource and the information indicating to obtain a TA. For example, the first message carries the configuration information of the one or more resources, and the second message carries the information indicating to obtain a TA. This manner of separately indicating, by using the two messages, the configuration information of the first resource and the information indicating to obtain a TA is more flexible.

In a possible implementation, the first message is an mTRP transmission configuration message, and the second message is a physical downlink control channel order PDCCH order.

In a possible implementation, the first message further includes a correspondence between the first resource and the second TRP, and the correspondence between the first resource and the second TRP includes the configuration information of the first resource and identification information of the second TRP.

The method further includes:
The terminal device determines, based on the correspondence between the first resource and the second TRP, that the second TA corresponds to the second TRP.

In this implementation, the first message further includes the correspondence between the first resource and the second TRP, so that the terminal device subsequently determines, based on the correspondence between the first resource and the second TRP, that the subsequently received second TA corresponds to the second TRP.

In a possible implementation, the second message further includes a correspondence between the first resource and the second TRP, and the correspondence between the first resource and the second TRP includes indication information of the first resource and identification information of the second TRP.

The method further includes:
The terminal device determines, based on the correspondence between the first resource and the second TRP, that the second TA corresponds to the second TRP.

In this implementation, the second message further includes the correspondence between the first resource and the second TRP, so that the terminal device subsequently determines, based on the correspondence between the first resource and the second TRP, that the subsequently received second TA corresponds to the second TRP.

In a possible implementation, that the terminal device receives, from the network device, information indicating the second TA includes:
The terminal device receives a correspondence between the second TA and the second TRP from the network device. The correspondence between the second TA and the second TRP includes the information indicating the second TA and identification information of the second TRP.

The method further includes:
The terminal device determines, based on the correspondence between the second TA and the second TRP, that the second TA corresponds to the second TRP.

In this implementation, when delivering information about the second TA, the network device delivers the identification information of the second TRP, so that the terminal device subsequently identifies that the received second TA corresponds to the second TRP.

In a possible implementation, the first resource is any one of the following:
a beam, a random access resource, or a sounding reference signal SRS resource.

In a possible implementation, the method further includes:
The terminal device receives an adjustment command from the network device. The adjustment command includes the identification information of the second TRP and TA update information corresponding to the second TRP, and the TA update information is used to update the second TA.

In this implementation, TAs corresponding to a plurality of TRPs may be updated and maintained by using an adjustment command. For example, updating the TA corresponding to the second TRP is used as an example. The adjustment command may include the identification information of the second TRP and TA update information corresponding to the second TRP. Therefore, the terminal device may determine, based on the identification information of the second TRP, that the adjustment command is an adjustment command for the TA corresponding to the second TRP, and then may update the second TA based on the TA update information corresponding to the second TRP, to obtain a more accurate TA value. This helps improve accuracy of sending an uplink signal to the second TRP based on the second TA.

In a possible implementation, the mTRP transmission configuration information further includes at least one of the following configuration information of a second resource corresponding to the second TRP:
configuration information of a physical downlink control channel PDCCH resource, configuration information of a physical uplink control channel PUCCH resource, configuration information of a physical uplink shared channel PUSCH resource used for semi-persistent channel state information reporting, configuration information of a downlink assignment resource, configuration information of an uplink grant resource, configuration information of a beam and/or a beam set, and configuration information of a resource corresponding to an uplink reference signal.

In a possible implementation, the method further includes:
The terminal device receives an adjustment command from the network device by using the second resource. The adjustment command includes TA update information corresponding to the second TRP, and the TA update information is used to update the second TA.

The terminal device determines, based on a correspondence between the second resource and the second TRP, that the adjustment command corresponds to the second TRP. The correspondence between the second resource and the second TRP includes configuration information of the second resource and the identification information of the second TRP.

In this implementation, a TRP whose TA is adjusted according to the adjustment command may be distinguished by using a resource. Therefore, a more accurate TA value is obtained, thereby helping improve accuracy of sending an uplink signal.

In a possible implementation, the first TRP corresponds to a first timer, and the second TRP corresponds to a second timer.

The method further includes:
When the first timer has not expired and the second timer expires, the terminal device performs at least one of the following operations:
The terminal device flushes a buffer of a hybrid automatic repeat request HARQ process corresponding to the second TRP.

The terminal device releases the PUCCH resource corresponding to the second TRP and/or the resource corresponding to the uplink reference signal corresponding to the second TRP.

The terminal device clears a preconfigured downlink assignment resource and uplink grant resource corresponding to the second TRP.

The terminal device clears an associated PUSCH resource that corresponds to the second TRP and that is used for semi-persistent channel state information reporting.

The terminal device maintains the second TA.

The terminal device sends indication information to the network device based on the first TA. The indication information indicates that the second TA is invalid.

In this implementation, when the terminal device identifies that a part of TRPs has an invalid TA/is in uplink out-of-synchronization, the terminal device may immediately notify the network device of out-of-synchronization information via a TRP with a valid TA/in uplink synchronization, so that the network restores an uplink of the UE to a synchronized state in time, and restores an mTRP transmission state, thereby improving reliability and transmission capacity.

In a possible implementation, that the terminal device sends indication information to the network device based on the first TA includes:
When a data volume of to-be-sent data in the terminal device is greater than or equal to a first threshold, the terminal device sends the indication information to the network device based on the first TA.

In this implementation, when finding that the second TA corresponding to the second TRP is invalid, the terminal device may not immediately perform reporting, but wait until the data volume of the to-be-sent data in the terminal device exceeds the first threshold, and then send the indication information based on the first TA to notify the network device that the TA corresponding to the second TRP is invalid. In this manner, when an uplink service volume of the terminal device is large, the network device can be notified in time that the terminal device is in uplink out-of-synchronization, and the network device may subsequently re-indicate the terminal to obtain information about the second TA.

In a possible implementation, the first TRP and the second TRP correspond to a same cell, or the first TRP and the second TRP correspond to different cells. Therefore, the solution in this application is applicable to a plurality of scenarios, for example, an intra-cell mTRP scenario (that is, the first TRP and the second TRP correspond to a same cell) and an inter-cell mTRP scenario (that is, the first TRP and the second TRP correspond to different cells), and is highly applicable.

In a possible implementation, the first TRP and the second TRP correspond to different cells, the first TRP corresponds to a source cell, and the second TRP corresponds to a target cell.

After the terminal device receives, from the network device, the information indicating the second TA, the method further includes:
The terminal device receives a handover command from the source cell.

The terminal device switches from the source cell to the target cell according to the handover command. The handover command indicates to use the second TA in the target cell. Therefore, this application may be further extended to a mobility/handover scenario (that is, a cell handover scenario), thereby further expanding an application scope of the solution.

In a possible implementation, the information indicating the second TA includes either of the following:
a value of the second TA, or information about a difference between a value of the first TA and the value of the second TA.

In this implementation, the network device may directly indicate the value of the second TA, or may indicate the information about the difference. When the network device indicates the information about the difference, the indication can be completed by using fewer bits, thereby helping reduce signaling overheads.

In a possible implementation, the information indicating the second TA is carried in a random access response message, or the information indicating the second TA is carried in a media access control control element MAC CE.

In a possible implementation, the information used to determine the second TA of the second TRP includes either of the following:
a preamble or an SRS.

In a possible implementation, after the terminal device receives, from the network device, the information indicating the second TA, the method further includes:
The terminal device releases the first resource.

In this implementation, the terminal device releases the first resource, so that the network device reclaims the resource in time for use by another terminal device that needs to use the first resource.

According to a second aspect, this application provides a communication method. The method is applicable to a network device or a chip in a network device. The following uses an example in which the network device performs the method for description. The method includes:
The network device sends a first timing advance TA corresponding to a first transmission reception point TRP to a terminal device. The first TA is used by the terminal device to communicate with the first TRP.

The network device sends, to the terminal device, configuration information of a first resource and information indicating to obtain a TA.

The network device receives information that is sent by the terminal device by using the first resource in response to the information indicating to obtain a TA and that is used to determine a second TA of a second TRP.

The network device sends, to the terminal device, information indicating the second TA. The second TA is used by the terminal device to communicate with the second TRP.

In a possible implementation, that the network device sends, to the terminal device, configuration information of a first resource and information indicating to obtain a TA includes:
The network device sends a multi-transmission reception point mTRP transmission configuration message to the terminal device. The mTRP transmission configuration message includes the configuration information of the first resource and the information indicating to obtain a TA.

In a possible implementation, that the network device sends, to the terminal device, configuration information of a first resource and information indicating to obtain a TA includes:
The network device sends a multi-transmission reception point mTRP transmission configuration message to the terminal device. The mTRP transmission configuration message includes a correspondence between the first resource and the second TRP and the information indicating to obtain a TA, and the correspondence between the first resource and the second TRP includes the configuration information of the first resource and identification information of the second TRP.

In a possible implementation, that the network device sends, to the terminal device, configuration information of a first resource and information indicating to obtain a TA includes:
The network device sends a first message to the terminal device. The first message includes configuration information of one or more resources, and the one or more resources include the first resource.

The network device sends a second message to the terminal device. The second message includes the information indicating to obtain a TA.

In a possible implementation, the first message is an mTRP transmission configuration message, and the second message is a physical downlink control channel order PDCCH order.

In a possible implementation, the first message further includes a correspondence between the first resource and the second TRP, and the correspondence between the first resource and the second TRP includes the configuration information of the first resource and identification information of the second TRP.

In a possible implementation, the second message further includes a correspondence between the first resource and the second TRP, and the correspondence between the first resource and the second TRP includes indication information of the first resource and identification information of the second TRP.

In a possible implementation, that the network device sends, to the terminal device, information indicating the second TA includes:
The network device sends a correspondence between the second TA and the second TRP to the terminal device. The correspondence between the second TA and the second TRP includes the information indicating the second TA and identification information of the second TRP.

In a possible implementation, the first resource is any one of the following:
a beam, a random access resource, or a sounding reference signal SRS resource.

In a possible implementation, the method further includes:
The network device sends an adjustment command to the terminal device. The adjustment command includes the identification information of the second TRP and TA update information corresponding to the second TRP, and the TA update information is used to update the second TA.

In a possible implementation, the mTRP transmission configuration information further includes at least one of the following configuration information of a second resource corresponding to the second TRP:
configuration information of a physical downlink control channel PDCCH resource, configuration information of a physical uplink control channel PUCCH resource, configuration information of a physical uplink shared channel PUSCH resource used for semi-persistent channel state information reporting, configuration information of a downlink assignment resource, configuration information of an uplink grant resource, configuration information of a beam and/or a beam set, and configuration information of a resource corresponding to an uplink reference signal.

In a possible implementation, the method further includes:
The network device sends an adjustment command to the terminal device by using the second resource. The adjustment command includes TA update information corresponding to the second TRP, and the TA update information is used to update the second TA.

In a possible implementation, the method further includes:
The network device receives indication information from the terminal device. The indication information indicates that the second TA is invalid.

In a possible implementation, the first TRP and the second TRP correspond to a same cell, or the first TRP and the second TRP correspond to different cells.

In a possible implementation, the information indicating the second TA includes either of the following:
a value of the second TA, or information about a difference between a value of the first TA and the value of the second TA.

In a possible implementation, the information indicating the second TA is carried in a random access response message, or the information indicating the second TA is carried in a media access control control element MAC CE.

In a possible implementation, the information used to determine the second TA of the second TRP includes either of the following:
a preamble or an SRS.

It should be noted that, for beneficial effects of the second aspect, refer to beneficial effects of the first aspect. Details are not described herein again.

According to a third aspect, this application provides a communication method. The method is applicable to a terminal device or a chip in a terminal device. The following uses an example in which the terminal device performs the method for description. The method includes:
The terminal device receives, from a network device, configuration information of a third resource corresponding to a first TRP and configuration information of a first resource corresponding to a second TRP.

The terminal device sends, to the first TRP by using the third resource, information used to determine a first TA of the first TRP, and sends, to the second TRP by using the first resource, information used to determine a second TA of the second TRP.

The terminal device receives, from the network device, information indicating the first TA and information indicating the second TA.

In this application, the terminal device may obtain a TA corresponding to each of a plurality of TRPs at the same time. Therefore, in subsequent communication, the terminal device can send signals to different TRPs at accurate uplink sending time.

In a possible implementation, that the terminal device receives, from a network device, configuration information of a third resource corresponding to a first TRP and configuration information of a first resource corresponding to a second TRP includes:
The terminal device receives a handover command from the network device. The handover command includes the configuration information of the third resource corresponding to the first TRP and the configuration information of the first resource corresponding to the second TRP. Therefore, this application is applicable to a cell handover scenario.

In a possible implementation, the handover command further includes a correspondence between the third resource and the first TRP, and a correspondence between the first resource and the second TRP. The correspondence between the third resource and the first TRP includes the configuration information of the third resource and identification information of the first TRP, and the correspondence between the first resource and the second TRP includes the configuration information of the first resource and identification information of the second TRP.

The method further includes:
The terminal device determines, based on the correspondence between the third resource and the first TRP, that the first TA corresponds to the first TRP.

The terminal device determines, based on the correspondence between the first resource and the second TRP, that the second TA corresponds to the second TRP.

In this implementation, the network device delivers the correspondence between the third resource and the first TRP and the correspondence between the first resource and the second TRP, so that the terminal device subsequently determines, based on the correspondence between the third resource and the first TRP, that the subsequently received first TA corresponds to the first TRP, and determines, based on the correspondence between the first resource and the second TRP, that the subsequently received second TA corresponds to the second TRP.

In a possible implementation, that the terminal device receives, from the network device, information indicating the first TA and information indicating the second TA includes:
The terminal device receives a third message from the network device. The third message includes the information indicating the first TA and the information indicating the second TA.

In this implementation, the network device uses one message to carry the information indicating the first TA and the information indicating the second TA. This helps reduce signaling overheads.

In a possible implementation, the third message further includes a correspondence between the first TA and the first TRP, and a correspondence between the second TA and the second TRP. The correspondence between the first TA and the first TRP includes the information indicating the first TA and the identification information of the first TRP, and the correspondence between the second TA and the second TRP includes the information indicating the second TA and the identification information of the second TRP.

The method further includes:
The terminal device determines, based on the correspondence between the first TA and the first TRP, that the first TA corresponds to the first TRP.

The terminal device determines, based on the correspondence between the second TA and the second TRP, that the second TA corresponds to the second TRP.

In this implementation, the third message carries the correspondence between the third resource and the first TRP and the correspondence between the first resource and the second TRP, so that the terminal device subsequently determines, based on the correspondence between the third resource and the first TRP, that the subsequently received first TA corresponds to the first TRP, and determines, based on the correspondence between the first resource and the second TRP, that the subsequently received second TA corresponds to the second TRP.

In a possible implementation, that the terminal device receives, from the network device, information indicating the first TA and information indicating the second TA includes:
The terminal device receives a fourth message from the network device. The fourth message includes the information indicating the first TA.

The terminal device receives a fifth message from the network device. The fifth message includes the information indicating the second TA.

In this implementation, the network device may deliver, by using two messages, the information indicating the first TA and the information indicating the second TA. For example, the fourth message carries the information indicating the first TA, and the fifth message carries the information indicating the second TA. This helps improve efficiency of TA delivery. Particularly, if the two TRPs are on two network devices, as two messages are used for delivery, the network devices of the first TRP and the second TRP may directly send the TAs to the terminal device without interaction between the two devices, so that a processing time is shorter, and an interaction process between the network devices is reduced.

In a possible implementation, the fourth message further includes a correspondence between the first TA and the first TRP, and the correspondence between the first TA and the first TRP includes the information indicating the first TA and the identification information of the first TRP; and the fifth message further includes a correspondence between the second TA and the second TRP, and the correspondence between the second TA and the second TRP includes the information indicating the second TA and the identification information of the second TRP.

The method further includes:
The terminal device determines, based on the correspondence between the first TA and the first TRP, that the first TA corresponds to the first TRP.

The terminal device determines, based on the correspondence between the second TA and the second TRP, that the second TA corresponds to the second TRP.

In this implementation, in this implementation, the fourth message carries the correspondence between the third resource and the first TRP, and the fifth message carries the correspondence between the first resource and the second TRP, so that the terminal device subsequently determines, based on the correspondence between the third resource and the first TRP, that the subsequently received first TA corresponds to the first TRP, and determines, based on the correspondence between the first resource and the second TRP, that the subsequently received second TA corresponds to the second TRP.

In a possible implementation, the first resource or the third resource is any one of the following:
a beam, a random access resource, or a sounding reference signal SRS resource.

According to a fourth aspect, this application provides a communication method. The method is applicable to a network device or a chip in a network device. The following uses an example in which the network device performs the method for description. The method includes:
The network device sends, to a terminal device, configuration information of a third resource corresponding to a first TRP and configuration information of a first resource corresponding to a second TRP.

The network device receives, from the terminal device via the first TRP, information used to determine a first TA of the first TRP, and receives, from the terminal device via the second TRP, information used to determine a second TA of the second TRP.

The network device sends, to the terminal device, information indicating the first TA and information indicating the second TA.

In a possible implementation, that the network device sends, to a terminal device, configuration information of a third resource corresponding to a first TRP and configuration information of a first resource corresponding to a second TRP includes:
The network device sends a handover command to the terminal device. The handover command includes the configuration information of the third resource corresponding to the first TRP and the configuration information of the first resource corresponding to the second TRP.

In a possible implementation, the handover command further includes a correspondence between the third resource and the first TRP, and a correspondence between the first resource and the second TRP. The correspondence between the third resource and the first TRP includes the configuration information of the third resource and identification information of the first TRP, and the correspondence between the first resource and the second TRP includes the configuration information of the first resource and identification information of the second TRP.

In a possible implementation, that the network device sends, to the terminal device, information indicating the first TA and information indicating the second TA includes:
The network device sends a third message to the terminal device. The third message includes the information indicating the first TA and the information indicating the second TA.

In a possible implementation, the third message further includes a correspondence between the first TA and the first TRP, and a correspondence between the second TA and the second TRP. The correspondence between the first TA and the first TRP includes the information indicating the first TA and the identification information of the first TRP, and the correspondence between the second TA and the second TRP includes the information indicating the second TA and the identification information of the second TRP.

In a possible implementation, that the network device sends, to the terminal device, information indicating the first TA and information indicating the second TA includes:
The network device sends a fourth message to the terminal device. The fourth message includes the information indicating the first TA.

The network device sends a fifth message to the terminal device. The fifth message includes the information indicating the second TA.

In a possible implementation, the fourth message further includes a correspondence between the first TA and the first TRP, and the correspondence between the first TA and the first TRP includes the information indicating the first TA and the identification information of the first TRP; and the fifth message further includes a correspondence between the second TA and the second TRP, and the correspondence between the second TA and the second TRP includes the information indicating the second TA and the identification information of the second TRP.

In a possible implementation, the first resource or the third resource is any one of the following:
a beam, a random access resource, or a sounding reference signal SRS resource.

It should be noted that, for beneficial effects of the fourth aspect, refer to beneficial effects of the third aspect. Details are not described herein again.

According to a fifth aspect, this application provides a communication method. The method is applicable to a terminal device or a chip in a terminal device. The following uses an example in which the terminal device performs the method for description. The terminal device has obtained a first timing advance TA for communicating with a first transmission reception point TRP. The method includes:
The terminal device receives a multi-transmission reception point mTRP transmission configuration message from a network device. The mTRP transmission configuration message includes information indicating a second TA, the second TA is a TA corresponding to a second TRP, and the information indicating the second TA includes either of the following: a value of the second TA, or information about a difference between a value of the first TA and the value of the second TA.

The terminal device communicates with the second TRP by using the second TA.

In this application, when the terminal device has obtained the first TA for communicating with the first TRP (that is, the terminal device has performed single-TRP transmission), if the network device determines that the terminal device is suitable for mTRP transmission, the network device may indicate the terminal device to perform mTRP transmission, and directly indicate information about the second TA to the terminal device. Therefore, after the terminal device obtains the second TA, in subsequent communication, the terminal device can send signals to different TRPs at accurate uplink sending time.

In a possible implementation, that the mTRP transmission configuration message includes information indicating a second TA includes:
The mTRP transmission configuration message includes identification information of the second TRP and the information indicating the second TA.

According to a sixth aspect, this application provides a communication method. The method is applicable to a network device or a chip in a network device. The following uses an example in which the network device performs the method for description. The method includes:
The network device sends a first timing advance TA corresponding to a first transmission reception point TRP to a terminal device. The first TA is used by the terminal device to communicate with the first TRP.

The network device sends a multi-transmission reception point mTRP transmission configuration message to the terminal device. The mTRP transmission configuration message includes information indicating a second TA, the second TA is a TA corresponding to a second TRP, the information indicating the second TA includes either of the following: a value of the second TA, or information about a difference between a value of the first TA and the value of the second TA, and the second TA is used by the terminal device to communicate with the second TRP.

In a possible implementation, that the mTRP transmission configuration message includes information indicating a second TA includes:
The mTRP transmission configuration message includes identification information of the second TRP and the information indicating the second TA.

It should be noted that, for beneficial effects of the sixth aspect, refer to beneficial effects of the fifth aspect. Details are not described herein again.

According to a seventh aspect, this application provides a communication apparatus. The apparatus is a terminal device, the terminal device has obtained a first timing advance TA for communicating with a first transmission reception point TRP, and the apparatus includes:
a transceiver unit, configured to obtain, from a network device, configuration information of a first resource and information indicating to obtain a TA; and
a processing unit, configured to send, based on the information indicating to obtain a TA, information used to determine a second TA of a second TRP to the network device via the transceiver unit by using the first resource.

The transceiver unit is configured to receive, from the network device, information indicating the second TA. The second TA is used by the terminal device to communicate with the second TRP.

In a possible implementation, when obtaining, from the network device, the configuration information of the first resource and the information indicating to obtain a TA, the transceiver unit is configured to:
obtain a multi-transmission reception point mTRP transmission configuration message from the network device, where the mTRP transmission configuration message includes the configuration information of the first resource and the information indicating to obtain a TA.

In a possible implementation, when obtaining, from the network device, the configuration information of the first resource and the information indicating to obtain a TA, the transceiver unit is configured to:
obtain a multi-transmission reception point mTRP transmission configuration message from the network device, where the mTRP transmission configuration message includes a correspondence between the first resource and the second TRP and the information indicating to obtain a TA, and the correspondence between the first resource and the second TRP includes the configuration information of the first resource and identification information of the second TRP.

The processing unit is further configured to:
determine, based on the correspondence between the first resource and the second TRP, that the second TA corresponds to the second TRP.

In a possible implementation, when obtaining, from the network device, the configuration information of the first resource and the information indicating to obtain a TA, the transceiver unit is configured to:
receive a first message from the network device, where the first message includes configuration information of one or more resources, and the one or more resources include the first resource; and
receive a second message from the network device, where the second message includes the information indicating to obtain a TA.

In a possible implementation, the first message is an mTRP transmission configuration message, and the second message is a physical downlink control channel order PDCCH order.

In a possible implementation, the first message further includes a correspondence between the first resource and the second TRP, and the correspondence between the first resource and the second TRP includes the configuration information of the first resource and identification information of the second TRP.

The processing unit is further configured to:
determine, based on the correspondence between the first resource and the second TRP, that the second TA corresponds to the second TRP.

In a possible implementation, the second message further includes a correspondence between the first resource and the second TRP, and the correspondence between the first resource and the second TRP includes indication information of the first resource and identification information of the second TRP.

The processing unit is further configured to:
determine, based on the correspondence between the first resource and the second TRP, that the second TA corresponds to the second TRP.

In a possible implementation, when receiving, from the network device, the information indicating the second TA, the transceiver unit is configured to:
receive a correspondence between the second TA and the second TRP from the network device, where the correspondence between the second TA and the second TRP includes the information indicating the second TA and identification information of the second TRP.

The processing unit is further configured to:
determine, based on the correspondence between the second TA and the second TRP, that the second TA corresponds to the second TRP.

In a possible implementation, the first resource is any one of the following:
a beam, a random access resource, or a sounding reference signal SRS resource.

In a possible implementation, the transceiver unit is further configured to:
receive an adjustment command from the network device, where the adjustment command includes the identification information of the second TRP and TA update information corresponding to the second TRP, and the TA update information is used to update the second TA.

In a possible implementation, the mTRP transmission configuration information further includes at least one of the following configuration information of a second resource corresponding to the second TRP:
configuration information of a physical downlink control channel PDCCH resource, configuration information of a physical uplink control channel PUCCH resource, configuration information of a physical uplink shared channel PUSCH resource used for semi-persistent channel state information reporting, configuration information of a downlink assignment resource, configuration information of an uplink grant resource, configuration information of a beam and/or a beam set, and configuration information of a resource corresponding to an uplink reference signal.

In a possible implementation, the transceiver unit is further configured to receive an adjustment command from the network device by using the second resource. The adjustment command includes TA update information corresponding to the second TRP, and the TA update information is used to update the second TA.

The processing unit is further configured to determine, based on a correspondence between the second resource and the second TRP, that the adjustment command corresponds to the second TRP. The correspondence between the second resource and the second TRP includes configuration information of the second resource and the identification information of the second TRP.

In a possible implementation, the first TRP corresponds to a first timer, and the second TRP corresponds to a second timer.

When the first timer has not expired and the second timer expires, the processing unit performs at least one of the following operations:
flushing a buffer of a hybrid automatic repeat request HARQ process corresponding to the second TRP;
releasing the PUCCH resource corresponding to the second TRP and/or the resource corresponding to the uplink reference signal corresponding to the second TRP;
clearing a preconfigured downlink assignment resource and uplink grant resource corresponding to the second TRP;
clearing an associated PUSCH resource that corresponds to the second TRP and that is used for semi-persistent channel state information reporting;
maintaining the second TA; and
sending indication information to the network device based on the first TA via the transceiver unit, where the indication information indicates that the second TA is invalid.

In a possible implementation, when sending the indication information to the network device based on the first TA, the processing unit is configured to:
when a data volume of to-be-sent data in the terminal device is greater than or equal to a first threshold, send the indication information to the network device based on the first TA via the transceiver unit.

In a possible implementation, the first TRP and the second TRP correspond to a same cell, or the first TRP and the second TRP correspond to different cells.

In a possible implementation, the first TRP and the second TRP correspond to different cells, the first TRP corresponds to a source cell, and the second TRP corresponds to a target cell.

After receiving, from the network device, the information indicating the second TA, the transceiver unit is further configured to:
receive a handover command from the source cell; and
switch from the source cell to the target cell according to the handover command, where the handover command indicates to use the second TA in the target cell.

In a possible implementation, the information indicating the second TA includes either of the following:
a value of the second TA, or information about a difference between a value of the first TA and the value of the second TA.

In a possible implementation, the information indicating the second TA is carried in a random access response message, or the information indicating the second TA is carried in a media access control control element MAC CE.

In a possible implementation, the information used to determine the second TA of the second TRP includes either of the following:
a preamble or an SRS.

In a possible implementation, after receiving, from the network device, the information indicating the second TA, the processing unit is further configured to:
release the first resource.

According to an eighth aspect, this application provides a communication apparatus. The apparatus is a network device, and the apparatus includes:
a transceiver unit, configured to send a first timing advance TA corresponding to a first transmission reception point TRP to a terminal device, where the first TA is used by the terminal device to communicate with the first TRP.

The transceiver unit is configured to send, to the terminal device, configuration information of a first resource and information indicating to obtain a TA.

The transceiver unit is configured to receive information that is sent by the terminal device by using the first resource in response to the information indicating to obtain a TA and that is used to determine a second TA of a second TRP.

The transceiver unit is configured to send, to the terminal device, information indicating the second TA. The second TA is used by the terminal device to communicate with the second TRP.

In a possible implementation, when sending, to the terminal device, the configuration information of the first resource and the information indicating to obtain a TA, the transceiver unit is configured to:
send a multi-transmission reception point mTRP transmission configuration message to the terminal device, where the mTRP transmission configuration message includes the configuration information of the first resource and the information indicating to obtain a TA.

In a possible implementation, when sending, to the terminal device, the configuration information of the first resource and the information indicating to obtain a TA, the transceiver unit is configured to:
send a multi-transmission reception point mTRP transmission configuration message to the terminal device, where the mTRP transmission configuration message includes a correspondence between the first resource and the second TRP and the information indicating to obtain a TA, and the correspondence between the first resource and the second TRP includes the configuration information of the first resource and identification information of the second TRP.

In a possible implementation, when sending, to the terminal device, the configuration information of the first resource and the information indicating to obtain a TA, the transceiver unit is configured to:
send a first message to the terminal device, where the first message includes configuration information of one or more resources, and the one or more resources include the first resource; and
send a second message to the terminal device, where the second message includes the information indicating to obtain a TA.

In a possible implementation, the first message is an mTRP transmission configuration message, and the second message is a physical downlink control channel order PDCCH order.

In a possible implementation, the first message further includes a correspondence between the first resource and the second TRP, and the correspondence between the first resource and the second TRP includes the configuration information of the first resource and identification information of the second TRP.

In a possible implementation, the second message further includes a correspondence between the first resource and the second TRP, and the correspondence between the first resource and the second TRP includes indication information of the first resource and identification information of the second TRP.

In a possible implementation, when sending, to the terminal device, the information indicating the second TA, the transceiver unit is configured to:
send a correspondence between the second TA and the second TRP to the terminal device, where the correspondence between the second TA and the second TRP includes the information indicating the second TA and identification information of the second TRP.

In a possible implementation, the first resource is any one of the following:
a beam, a random access resource, or a sounding reference signal SRS resource.

In a possible implementation, the transceiver unit is further configured to:
send an adjustment command to the terminal device, where the adjustment command includes the identification information of the second TRP and TA update information corresponding to the second TRP, and the TA update information is used to update the second TA.

In a possible implementation, the mTRP transmission configuration information further includes at least one of the following configuration information of a second resource corresponding to the second TRP:
configuration information of a physical downlink control channel PDCCH resource, configuration information of a physical uplink control channel PUCCH resource, configuration information of a physical uplink shared channel PUSCH resource used for semi-persistent channel state information reporting, configuration information of a downlink assignment resource, configuration information of an uplink grant resource, configuration information of a beam and/or a beam set, and configuration information of a resource corresponding to an uplink reference signal.

In a possible implementation, the transceiver unit is further configured to:
send an adjustment command to the terminal device by using the second resource, where the adjustment command includes TA update information corresponding to the second TRP, and the TA update information is used to update the second TA.

In a possible implementation, the transceiver unit is further configured to:
receive indication information from the terminal device, where the indication information indicates that the second TA is invalid.

In a possible implementation, the first TRP and the second TRP correspond to a same cell, or the first TRP and the second TRP correspond to different cells.

In a possible implementation, the information indicating the second TA includes either of the following:
a value of the second TA, or information about a difference between a value of the first TA and the value of the second TA.

In a possible implementation, the information indicating the second TA is carried in a random access response message, or the information indicating the second TA is carried in a media access control control element MAC CE.

In a possible implementation, the information used to determine the second TA of the second TRP includes either of the following:
a preamble or an SRS.

According to a ninth aspect, this application provides a communication apparatus. The apparatus is a terminal device, and the apparatus includes:
a transceiver unit, configured to receive, from a network device, configuration information of a third resource corresponding to a first TRP and configuration information of a first resource corresponding to a second TRP.

The transceiver unit is configured to: send, to the first TRP by using the third resource, information used to determine a first TA of the first TRP, and send, to the second TRP by using the first resource, information used to determine a second TA of the second TRP.

The transceiver unit is configured to receive, from the network device, information indicating the first TA and information indicating the second TA.

In a possible implementation, when receiving, from the network device, the configuration information of the third resource corresponding to the first TRP and the configuration information of the first resource corresponding to the second TRP, the transceiver unit is configured to:
receive a handover command from the network device, where the handover command includes the configuration information of the third resource corresponding to the first TRP and the configuration information of the first resource corresponding to the second TRP.

In a possible implementation, the handover command further includes a correspondence between the third resource and the first TRP, and a correspondence between the first resource and the second TRP. The correspondence between the third resource and the first TRP includes the configuration information of the third resource and identification information of the first TRP, and the correspondence between the first resource and the second TRP includes the configuration information of the first resource and identification information of the second TRP.

The apparatus further includes a processing unit, and the processing unit is configured to:
determine, based on the correspondence between the third resource and the first TRP, that the first TA corresponds to the first TRP; and
determine, based on the correspondence between the first resource and the second TRP, that the second TA corresponds to the second TRP.

In a possible implementation, when receiving, from the network device, the information indicating the first TA and the information indicating the second TA, the transceiver unit is configured to:
receive a third message from the network device, where the third message includes the information indicating the first TA and the information indicating the second TA.

In a possible implementation, the third message further includes a correspondence between the first TA and the first TRP, and a correspondence between the second TA and the second TRP. The correspondence between the first TA and the first TRP includes the information indicating the first TA and the identification information of the first TRP, and the correspondence between the second TA and the second TRP includes the information indicating the second TA and the identification information of the second TRP.

The apparatus further includes a processing unit, and the processing unit is configured to:
determine, based on the correspondence between the first TA and the first TRP, that the first TA corresponds to the first TRP; and
determine, based on the correspondence between the second TA and the second TRP, that the second TA corresponds to the second TRP.

In a possible implementation, when receiving, from the network device, the information indicating the first TA and the information indicating the second TA, the processing unit is configured to:
receive a fourth message from the network device, where the fourth message includes the information indicating the first TA; and
receive a fifth message from the network device, where the fifth message includes the information indicating the second TA.

In a possible implementation, the fourth message further includes a correspondence between the first TA and the first TRP, and the correspondence between the first TA and the first TRP includes the information indicating the first TA and the identification information of the first TRP; and the fifth message further includes a correspondence between the second TA and the second TRP, and the correspondence between the second TA and the second TRP includes the information indicating the second TA and the identification information of the second TRP.

The apparatus further includes a processing unit, and the processing unit is configured to:
determine, based on the correspondence between the first TA and the first TRP, that the first TA corresponds to the first TRP; and
determine, based on the correspondence between the second TA and the second TRP, that the second TA corresponds to the second TRP.

In a possible implementation, the first resource or the third resource is any one of the following:
a beam, a random access resource, or a sounding reference signal SRS resource.

According to a tenth aspect, this application provides a communication apparatus. The apparatus is a network device, and the apparatus includes:
a transceiver unit, configured to send, to a terminal device, configuration information of a third resource corresponding to a first TRP and configuration information of a first resource corresponding to a second TRP.

The transceiver unit is configured to: receive, from the terminal device via the first TRP, information used to determine a first TA of the first TRP, and receive, from the terminal device via the second TRP, information used to determine a second TA of the second TRP.

The transceiver unit is configured to send, to the terminal device, information indicating the first TA and information indicating the second TA.

In a possible implementation, when sending, to the terminal device, the configuration information of the third resource corresponding to the first TRP and the configuration information of the first resource corresponding to the second TRP, the transceiver unit is configured to:
send a handover command to the terminal device, where the handover command includes the configuration information of the third resource corresponding to the first TRP and the configuration information of the first resource corresponding to the second TRP.

In a possible implementation, the handover command further includes a correspondence between the third resource and the first TRP, and a correspondence between the first resource and the second TRP. The correspondence between the third resource and the first TRP includes the configuration information of the third resource and identification information of the first TRP, and the correspondence between the first resource and the second TRP includes the configuration information of the first resource and identification information of the second TRP.

In a possible implementation, when sending, to the terminal device, the information indicating the first TA and the information indicating the second TA, the transceiver unit is configured to:
send a third message to the terminal device, where the third message includes the information indicating the first TA and the information indicating the second TA.

In a possible implementation, the third message further includes a correspondence between the first TA and the first TRP, and a correspondence between the second TA and the second TRP. The correspondence between the first TA and the first TRP includes the information indicating the first TA and the identification information of the first TRP, and the correspondence between the second TA and the second TRP includes the information indicating the second TA and the identification information of the second TRP.

In a possible implementation, when sending, to the terminal device, the information indicating the first TA and the information indicating the second TA, the transceiver unit is configured to:
send a fourth message to the terminal device, where the fourth message includes the information indicating the first TA; and
send a fifth message to the terminal device, where the fifth message includes the information indicating the second TA.

In a possible implementation, the fourth message further includes a correspondence between the first TA and the first TRP, and the correspondence between the first TA and the first TRP includes the information indicating the first TA and the identification information of the first TRP; and the fifth message further includes a correspondence between the second TA and the second TRP, and the correspondence between the second TA and the second TRP includes the information indicating the second TA and the identification information of the second TRP.

In a possible implementation, the first resource or the third resource is any one of the following:
a beam, a random access resource, or a sounding reference signal SRS resource.

According to an eleventh aspect, this application provides a communication apparatus. The apparatus is a terminal device, the terminal has obtained a first timing advance TA for communicating with a first transmission reception point TRP, and the apparatus includes:
a transceiver unit, configured to receive a multi-transmission reception point mTRP transmission configuration message from a network device, where the mTRP transmission configuration message includes information indicating a second TA, the second TA is a TA corresponding to a second TRP, and the information indicating the second TA includes either of the following: a value of the second TA, or information about a difference between a value of the first TA and the value of the second TA; and
a processing unit, configured to communicate with the second TRP by using the second TA.

In a possible implementation, that the mTRP transmission configuration message includes information indicating a second TA includes:
The mTRP transmission configuration message includes identification information of the second TRP and the information indicating the second TA.

According to a twelfth aspect, this application provides a communication apparatus. The apparatus is a network device, and the apparatus includes:
a transceiver unit, configured to send a first timing advance TA corresponding to a first transmission reception point TRP to a terminal device, where the first TA is used by the terminal device to communicate with the first TRP.

The transceiver unit is configured to send a multi-transmission reception point mTRP transmission configuration message to the terminal device. The mTRP transmission configuration message includes information indicating a second TA, the second TA is a TA corresponding to a second TRP, the information indicating the second TA includes either of the following: a value of the second TA, or information about a difference between a value of the first TA and the value of the second TA, and the second TA is used by the terminal device to communicate with the second TRP.

In a possible implementation, that the mTRP transmission configuration message includes information indicating a second TA includes:
The mTRP transmission configuration message includes identification information of the second TRP and the information indicating the second TA.

According to a thirteenth aspect, this application provides a communication apparatus. The apparatus may be a terminal device, an apparatus in the terminal device, or an apparatus that can be used in combination with the terminal device. The communication apparatus may alternatively be a chip system. The communication apparatus may perform the method according to the first aspect, the third aspect, or the fifth aspect. A function of the communication apparatus may be implemented by hardware, or may be implemented by executing corresponding software by hardware. The hardware or software includes one or more units or modules corresponding to the function. The unit or module may be software and/or hardware. For operations performed by the communication apparatus and beneficial effects, refer to the method and beneficial effects described in the first aspect, the third aspect, or the fifth aspect. Details are not repeated.

According to a fourteenth aspect, this application provides a communication apparatus. The apparatus may be a network device, an apparatus in the network device, or an apparatus that can be used in combination with the network device. The communication apparatus may alternatively be a chip system. The communication apparatus may perform the method according to the second aspect, the fourth aspect, or the sixth aspect. A function of the communication apparatus may be implemented by hardware, or may be implemented by executing corresponding software by hardware. The hardware or software includes one or more units or modules corresponding to the function. The unit or module may be software and/or hardware. For operations performed by the communication apparatus and beneficial effects, refer to the method and beneficial effects described in the second aspect, the fourth aspect, or the sixth aspect. Details are not repeated.

According to a fifteenth aspect, this application provides a communication apparatus. The apparatus may be a terminal device. The communication apparatus includes a processor and a transceiver. The processor and the transceiver are configured to execute a computer program or instructions stored in at least one memory, to enable the apparatus to implement the method according to any one of the first aspect, the third aspect, or the fifth aspect.

According to a sixteenth aspect, this application provides a communication apparatus. The apparatus may be a terminal device. The communication apparatus includes a processor, a transceiver, and a memory. The processor, the transceiver, and the memory are coupled. The processor and the transceiver are configured to implement the method according to any one of the first aspect, the third aspect, or the fifth aspect, and/or the second aspect, the fourth aspect, or the sixth aspect.

According to a seventeenth aspect, this application provides a communication apparatus. The apparatus may be a network device. The communication apparatus includes a processor and a transceiver. The processor and the transceiver are configured to execute a computer program or instructions stored in at least one memory, to enable the apparatus to implement the method according to any one of the second aspect, the fourth aspect, or the sixth aspect.

According to an eighteenth aspect, this application provides a communication apparatus. The apparatus may be a network device. The communication apparatus includes a processor, a transceiver, and a memory. The processor, the transceiver, and the memory are coupled. The processor and the transceiver are configured to implement the method according to any one of the second aspect, the fourth aspect, or the sixth aspect, and/or the second aspect, the fourth aspect, or the sixth aspect.

According to a nineteenth aspect, this application provides a computer-readable storage medium. The storage medium stores a computer program or instructions, and when the computer program or the instructions are executed by a computer, the method according to any one of the first aspect, the third aspect, or the fifth aspect is implemented.

According to a twentieth aspect, this application provides a computer-readable storage medium. The storage medium stores a computer program or instructions, and when the computer program or the instructions are executed by a computer, the method according to any one of the second aspect, the fourth aspect, or the sixth aspect is implemented.

According to a twenty-first aspect, this application provides a computer program product including instructions. The computer program product includes computer program code, and when the computer program code is run on a computer, the method according to any one of the first aspect, the third aspect, or the fifth aspect is implemented.

According to a twenty-second aspect, this application provides a computer program product including instructions. The computer program product includes computer program code, and when the computer program code is run on a computer, the method according to any one of the second aspect, the fourth aspect, or the sixth aspect is implemented.

According to a twenty-third aspect, a communication system is provided. The communication system includes the terminal device according to the seventh aspect, the ninth aspect, or the eleventh aspect, and the network device according to the eighth aspect, the tenth aspect, or the twelfth aspect.

### BRIEF DESCRIPTION OF DRAWINGS

FIG. 1 is a diagram of a structure of a communication system according to an embodiment of this application;
FIG. 2 is a diagram of mTRP transmission according to an embodiment of this application;
FIG. 3 is a schematic flowchart of obtaining an initial TA in a non-contention-based random access procedure;
FIG. 4 is a diagram of an intra-cell mTRP transmission scenario according to an embodiment of this application;
FIG. 5 is a diagram of an inter-cell mTRP transmission scenario according to an embodiment of this application;
FIG. 6 is a schematic flowchart of a communication method according to an embodiment of this application;
FIG. 7 is another schematic flowchart of a communication method according to an embodiment of this application;
FIG. 8 is another schematic flowchart of a communication method according to an embodiment of this application;
FIG. 9 is another schematic flowchart of a communication method according to an embodiment of this application;
FIG. 10 is another schematic flowchart of a communication method according to an embodiment of this application;
FIG. 11 is another schematic flowchart of a communication method according to an embodiment of this application;
FIG. 12 is a diagram of a structure of a communication apparatus according to an embodiment of this application;
FIG. 13 is a diagram of a structure of another communication apparatus according to an embodiment of this application;
FIG. 14 is a diagram of a structure of another communication apparatus according to an embodiment of this application; and
FIG. 15 is a diagram of a structure of another communication apparatus according to an embodiment of this application.

### DESCRIPTION OF EMBODIMENTS

The following clearly and completely describes technical solutions in embodiments of this application with reference to accompanying drawings in embodiments of this application.

In descriptions of this application, unless otherwise specified, "/" means "or". For example, A/B may mean A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Words such as "first" and "second" neither limit a quantity or an execution sequence, nor indicate a definite difference.

In this application, the word such as "example" or "for example" is used to represent an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as new radio (new radio, NR), a system evolved after 5G, such as a 6th generation (6th generation, 6G) system, and a wireless local area network (Wireless Local Area Network, WLAN). This is not limited herein.

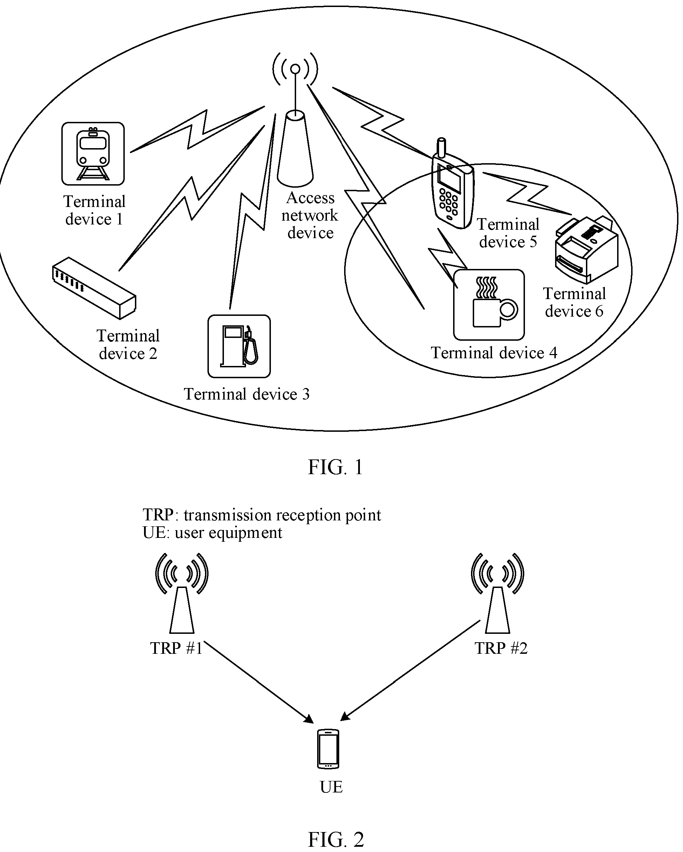

For example, FIG. 1 is a diagram of a structure of a communication system according to an embodiment of this application. As shown in FIG. 1, an access network device and a terminal device 1 to a terminal device 6 form a communication system. In the communication system, the terminal device 1 to the terminal device 6 may send uplink information to the access network device, and the access network device may send downlink information to the terminal device 1 to the terminal device 6. In addition, the terminal device 4 to the terminal device 6 may also form a communication system. In the communication system, the access network device may send downlink information to the terminal device 1, the terminal device 2, the terminal device 5, and the like. The terminal device 5 may send downlink information to the terminal device 4 and the terminal device 6. The terminal device 4 and the terminal device 6 may send uplink information to the access network device via the terminal device 5.

The terminal device in this embodiment of this application may be a device having a wireless transceiver function, and may be specifically a user equipment (user equipment, UE), an access terminal, a subscriber unit (subscriber unit), a subscriber station, a mobile station (mobile station), a customer-premises equipment (customer-premises equipment, CPE), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an in-vehicle device, a communication device carried on a high-altitude aircraft, a wearable device, an uncrewed aerial vehicle, a robot, a smart point of sale (point of sale, POS) machine, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In this embodiment of this application, an apparatus configured to implement a function of the terminal device may be the terminal device, or may be an apparatus that can support the terminal device in implementing the function, for example, a chip system. The apparatus may be installed in the terminal device or used in combination with the terminal device. In this embodiment of this application, the chip system may include a chip, or may include a chip and another discrete component.

The access network device in this embodiment of this application may be a device having a wireless transceiver function, configured to communicate with the terminal device, or may be a device that connects the terminal device to a wireless network. The access network device may be a node in a radio access network, and may alternatively be referred to as a base station or a radio access network (radio access network, RAN) node (or device). The access network device may be an evolved NodeB (evolved NodeB, eNB or eNodeB) in LTE, a next generation NodeB (next generation NodeB, gNB) in a 5G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the access network device in this embodiment of this application may include base stations in various forms, for example, a macro base station, a micro base station (or referred to as a small cell), a relay station, an access point, a device implementing a base station function in a communication system evolved after 5G, an access point (access point, AP) in a Wi-Fi system, a transmission reception point (transmission reception point, TRP), a transmission point (transmission point, TP), a mobile switching center, and devices that undertakes a base station function in device-to-device (Device-to-Device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud radio access network (cloud radio access network, C-RAN) system, and an access network device in a non-terrestrial network (non-terrestrial network, NTN) communication system, that is, may be deployed on a high-altitude platform or a satellite. This is not specifically limited in this embodiment of this application.

The access network device may communicate and interact with a core network device, to provide a communication service for the terminal device. The core network device is, for example, a device in a 5G core network (core network, CN). As a bearer network, the core network provides an interface to a data network, provides communication connection, authentication, management, and policy control for a terminal, carries a data service, and the like.

In this embodiment of this application, an apparatus configured to implement a function of the access network device may be the access network device, or may be an apparatus that can support the access network device in implementing the function, for example, a chip system. The apparatus may be installed in the access network device or used in combination with the access network device.

It may be understood that the access network device in the following embodiments of this application may alternatively be described as a network device. This is not limited herein.

To facilitate understanding of related content in embodiments of this application, the following describes some knowledge required in the solutions of this application. It should be noted that these explanations are intended to facilitate understanding of embodiments of this application, but should not be considered as a limitation on the protection scope claimed in this application.

### 1. Multiple-transmission reception point (multiple-transmission reception point, mTRP) transmission

The mTRP transmission means that a plurality of TRPs provide a communication service for a UE. The plurality of TRPs are a plurality of physically separated antennas or a plurality of antenna arrays on a same antenna, which form multiple TRPs (that is, mTRP), where different spatial channels are formed, and a maximum beamforming gain or a spatial diversity reliability gain is formed based on irrelevancy between spatial channels, to enhance coverage or reliability. For example, FIG. 2 is a diagram of mTRP transmission according to an embodiment of this application. As shown in FIG. 2, a TRP #1 and a TRP #2 are used as an example. The TRP #1 and the TRP #2 may communicate with a UE.

### 2. Timing advance (timing advance, TA)

The TA is a timing advance used by a UE to send an uplink signal to a network device. The UE determines, based on a TA value, a moment for sending the uplink signal. In a cell served by a network device, there are a plurality of UEs, for example, a UE 1 and a UE 2. If the UE 1 and the UE 2 send uplink signals at a same moment, because distances from the UE 1 and the UE 2 to the network device are different, time at which the uplink signals sent by the UE 1 and the UE 2 arrive at the network device is different, which may cause signal interference between users, so that the network device cannot correctly decode the signals of the two users. Therefore, the UE 1 and the UE 2 need to determine, based on respective TAs, time for sending the uplink signals, so that the time at which the signals arrive at the network device is close, thereby reducing signal interference.

### 3. TA Management

The TA management includes: (1) obtaining of an initial TA; (2) TA update or adjustment; and (3) behavior or processing after a TA is invalid.

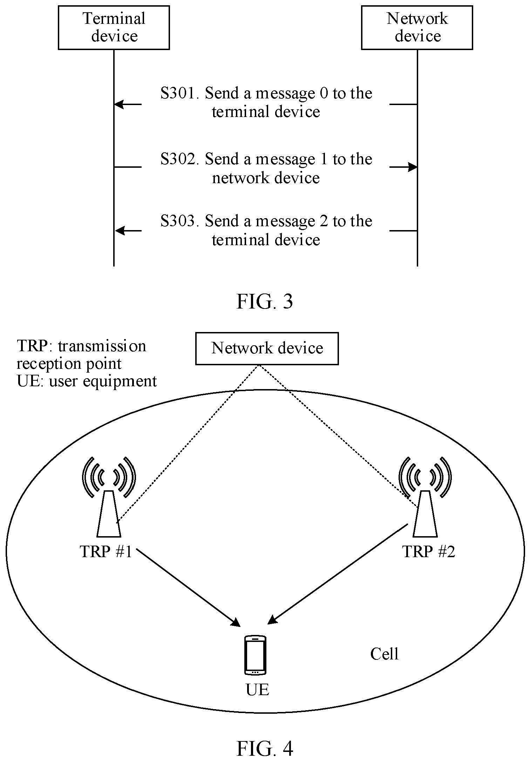

Specifically, (1) obtaining of an initial TA:
A UE obtains an initial TA through a random access procedure. For example, a non-contention-based random access procedure shown in FIG. 3 is used as an example to describe a process in which the UE obtains the initial TA. As shown in FIG. 3:
S301. A network device sends a message 0 (Msg0) to a terminal device.

The message 0 includes a random access resource configuration, and the random access resource configuration may include a preamble or the like.

S302. The terminal device sends a message 1 (Msg1) to the network device.

The message 1 includes the preamble assigned by the network device, that is, the terminal device initiates random access by using the preamble assigned by the network device.

S303. The network device sends a message 2 (Msg2) to the terminal device.

The message 2 may alternatively be referred to as a random access response (random access response, RAR) message. The message 2 includes a TA value calculated by the network device.

It may be understood that the network device in this embodiment of this application is an access network device, for example, may be specifically a gNB. The UE obtains, through a random access procedure, an initial TA for communicating with the gNB, and subsequently determines, when sending an uplink signal, a sending moment by using the TA.

### (2) TA update or adjustment:

When the gNB identifies that a moment at which the uplink signal sent by the UE arrives at the gNB deviates from an expected moment (for example, after a location of the UE moves, the previously used TA is inaccurate), the gNB may send a TA adjustment command. For example, the TA adjustment command may be a media access control control element (media access control control element, MAC CE). After receiving the MAC CE, the UE may update the TA.

### (3) Behavior or processing after a TA is invalid:

Because a TA value is calculated at a specific moment, after a period of time, the previously calculated TA may be no longer accurate. Therefore, the UE and/or the gNB may determine, by maintaining a timer, whether the previously received TA is still valid currently. For example, when receiving the initial TA, the UE may start/restart the timer. After receiving the TA adjustment command, the UE may restart the timer. When the timer expires, the TA is considered invalid.

After determining that the TA is invalid, the UE may release some configured resources related to uplink transmission, for example, a sounding reference signal (sounding reference signal, SRS), a physical uplink control channel (physical uplink control channel, PUCCH), or a configuration grant (configured grant, CG). Further, when the UE has uplink data to be transmitted and determines that the TA is invalid, the UE triggers a random access procedure. When the gNB has downlink data to be transmitted and determines that the TA is invalid, the gNB sends a message to the UE to trigger the UE to perform a random access procedure. The UE re-obtains a TA through a subsequent random access procedure.

It should be noted that the TA management is applicable to a single-TRP transmission process, or the TA management is also applicable to a process in which a plurality of TRPs correspond to a common TA in an mTRP transmission scenario, that is, a UE sends uplink signals to the mTRP based on the common TA. However, in the mTRP transmission scenario, a manner of determining, based on the common TA, a moment for sending an uplink signal causes low accuracy of sending the uplink signal.

Based on this, this application provides a communication method and a communication apparatus, to improve accuracy of sending an uplink signal in an mTRP transmission scenario.

It should be noted that, in this application, the solution is mainly described by using an example in which a UE communicates with two TRPs. It should be understood that the solution in this application is also applicable to an mTRP transmission scenario in which a UE communicates with more than two TRPs.

The following first separately describes several mTRP transmission scenarios to which this application is applicable.

The mTRP transmission scenarios mainly include an intra-cell mTRP scenario and an inter-cell mTRP scenario.

### (1) Intra-cell mTRP scenario

The intra-cell mTRP scenario means that a UE performs data transmission with a plurality of TRPs in a serving cell, that is, the plurality of TRPs serve the same cell. Alternatively, it may be understood that the plurality of TRPs are associated with a same physical cell identifier (physical cell identity, PCI). For example, FIG. 4 is a diagram of an intra-cell mTRP transmission scenario according to an embodiment of this application. As shown in FIG. 4, a TRP #1 and a TRP #2 belong to a same network device. Alternatively, it is understood that the TRP #1 and the TRP #2 correspond to a same cell. The TRP #1 and the TRP #2 may be configured to provide mTRP transmission, that is, intra-cell mTRP transmission, for the UE.

### (2) Inter-cell mTRP scenario

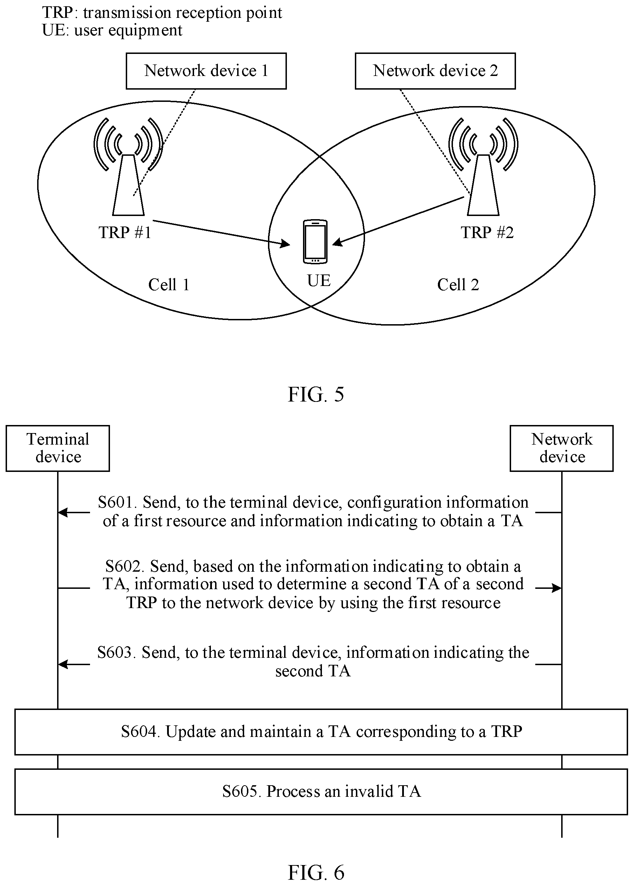

The inter-cell mTRP scenario means that in a serving cell, in addition to communicating with a TRP in the serving cell, a UE can further communicate with a TRP in another cell. In the inter-cell mTRP scenario, it may be understood that a plurality of TRPs communicating with the UE are associated with different PCIs. For example, FIG. 5 is a diagram of an inter-cell mTRP transmission scenario according to an embodiment of this application. As shown in FIG. 5, a TRP #1 belongs to a network device 1, and a TRP #2 belongs to a network device 2. Alternatively, it is understood that the TRP #1 corresponds to a cell 1, and the TRP #2 corresponds to a cell 2. The TRP #1 of the cell 1 and the TRP #2 of the cell 2 may perform mTRP transmission, that is, inter-cell mTRP transmission, through coordination.

It should be understood that, in FIG. 5, a network device serving the cell 1 is denoted as the network device 1, and a network device serving the cell 2 is denoted as the network device 2. However, in some possible deployment scenarios, for example, the cell 1 and the cell 2 are two cells of a same base station, that is, the cell 1 and the cell 2 are deployed at a same station. In this case, the following network device 1 and network device 2 are a same network device. Correspondingly, the following interaction between the network device 1 and the network device 2 may be understood as an internal implementation of one network device, and is an optional step in embodiments of this application.

Further, the mTRP transmission scenarios specifically include two cases:
(a) Case a: Before performing mTRP transmission, the UE first establishes a communication connection to a single TRP. For example, the UE first communicates with the TRP #1 to obtain a TA of the TRP #1, and then as indicated by the network device, the UE starts mTRP transmission, and establishes communication with the TRP #2 to obtain a TA of the TRP #2.
(b) Case b: The UE may directly perform mTRP transmission in a cell, that is, the UE needs to obtain TAs of the TRP #1 and the TRP #2 at the same time.

It should be noted that TA management in Case a and TA management in Case b are mainly different in a process of obtaining an initial TA, and are consistent in subsequent TA update and maintenance and behavior of the UE/network device after the TA is invalid. The following embodiments completely describe TA management processes in Case a and Case b in the intra-cell mTRP scenario and the inter-cell mTRP scenario, respectively.

The following describes in detail the communication method and the communication apparatus provided in this application.

FIG. 6 is a schematic flowchart of a communication method according to an embodiment of this application. Step 601 to step 605 are performed by a terminal device or a network device, or a chip in the terminal device or the network device. The following uses an example in which the terminal device and the network device perform the method for description.

It should be noted that the terminal device in FIG. 6 has obtained a first TA for communicating with a first TRP, that is, the embodiment shown in FIG. 6 mainly describes TA management in Case a in an intra-cell mTRP scenario.

As shown in FIG. 6, the communication method includes the following step S601 to step S605. Step S601 to step S603 are mainly descriptions of obtaining an initial TA in Case a in the intra-cell mTRP scenario. Step S604 is mainly descriptions of TA update or adjustment in Case a in the intra-cell mTRP scenario. Step S605 is mainly descriptions of behavior or processing after a TA is invalid in Case a in the intra-cell mTRP scenario.

S601. The terminal device obtains, from the network device, configuration information of a first resource and information indicating to obtain a TA.

In some feasible implementations, the network device may send configuration information of one or more resources to the terminal device, where the one or more resources include the first resource. For example, when the network device sends configuration information of only one resource, the resource is the first resource. When the network device sends configuration information of a plurality of (that is, two or more) resources, the plurality of resources include the first resource.

The configuration information of the one or more resources and the information indicating to obtain a TA may be both carried in one message. For example, the configuration information of the one or more resources and the information indicating to obtain a TA are carried in an mTRP transmission configuration message. In other words, the network device sends the mTRP transmission configuration message to the terminal device, where the mTRP transmission configuration message includes the configuration information of the one or more resources and the information indicating to obtain a TA.

Optionally, in some other feasible implementations, the configuration information of the one or more resources and the information indicating to obtain a TA may be each carried in one message. For example, the configuration information of the one or more resources is carried in a first message, and the information indicating to obtain a TA is carried in a second message. In other words, the network device sends the first message and the second message to the terminal device, where the first message includes the configuration information of the one or more resources, and the second message includes the information indicating to obtain a TA (or in other words, the second message may indicate to obtain a TA, where the following uses an example in which the second message includes the information indicating to obtain a TA). A sending sequence in which the network device sends the first message and the second message to the terminal device is not limited herein. For example, the first message is an mTRP transmission configuration message. For example, the second message is a physical downlink control channel order (PDCCH order). Optionally, the second message may alternatively be a MAC CE or the like. This is not limited herein.

When the configuration information of the one or more resources is carried in the first message, and the information indicating to obtain a TA is carried in the second message, the terminal device does not immediately perform S602 after receiving the first message, but performs S602 after receiving the second message. For example, the configuration information of the resource is a non-contention-based random access resource. When the terminal device receives a non-contention-based random access resource corresponding to a second TRP, the terminal device does not immediately initiate a random access procedure, but initiates a random access procedure after receiving the second message.

It should be noted that the "mTRP transmission configuration message" in this embodiment of this application may be understood as a message used to configure mTRP transmission. The mTRP transmission configuration message may be an RRC (Radio Resource Control, radio resource control) message or a message of another protocol layer. This is not limited in this application. The "information indicating to obtain a TA" in this embodiment of this application may be understood as information indicating the terminal device to send, to the network device, information used to determine a second TA of the second TRP, that is, for any information, provided that the terminal device learns, after obtaining the information, that an uplink message (for example, a preamble or an SRS) needs to be sent to the network device by using the first resource, the information may be understood as the information indicating to obtain a TA. In other words, a meaning represented by the information is not limited to indicating to obtain a TA. For example, the "information indicating to obtain a TA" is downlink control information (downlink control information, DCI) in a special format.

It may be understood that, in an implementation, that the network device sends configuration information of one or more resources to the terminal device may be specifically understood as that the network device sends a correspondence between each of the one or more resources and a TRP to the terminal device. A correspondence between any resource and a TRP includes configuration information of the resource and identification information of the TRP. For example, the identification information of the TRP may be a TRP ID. This is not limited herein. In other words, in addition to the configuration information of the one or more resources configured for the terminal device, the terminal device further knows a TRP to which each of the configured one or more resources corresponds in a one-to-one manner.

For example, the first resource in the one or more resources is used as an example. Assuming that the first resource corresponds to the second TRP, a correspondence, sent by the network device to the terminal device, between the first resource and the second TRP includes the configuration information of the first resource and identification information of the second TRP. It may be understood that, because the configuration information of the resource and the identification information of the corresponding TRP that are received by the terminal device are carried in a same message (for example, the mTRP transmission configuration message or the first message), the terminal device may naturally learn that there is a correspondence between the configured resource and the identification information of the TRP. Specifically, when the mTRP transmission configuration message or the first message includes configuration information of one resource and identification information of a TRP corresponding to the configuration information of the resource, the terminal device may determine that there is a correspondence between the resource and the identification information of the TRP that are included in the mTRP transmission configuration message or the first message. When the mTRP transmission configuration message or the first message includes configuration information of a plurality of resources and identification information of a TRP corresponding to each of the plurality of resources, the terminal device may determine, based on the configuration information of the resources and the identification information of the TRPs corresponding to the resources that are included in the mTRP transmission configuration message or the first message, a correspondence between the configuration information of the plurality of resources and the identification information of the TRP corresponding to each of the plurality of resources. Based on this, in this embodiment of this application, that the network device sends configuration information of one or more resources to the terminal device may alternatively be understood as that the network device sends, to the terminal device, the configuration information of the one or more resources and identification information of a TRP corresponding to each resource.

Optionally, in another implementation, the configuration information, sent by the network device to the terminal device, of the one or more resources may not include the identification information of the TRP, that is, from the mTRP transmission configuration message or the first message, the terminal device only knows that the configuration information of the one or more resources is configured, but does not know a specific TRP or TRPs for which the configuration information of the one or more resources is configured. In this case, if the terminal device wants to know a specific TRP for which configuration information of each resource is configured, the TRP may be further determined based on an association relationship between a TRP and a parameter name. Specifically, the parameter name may be a name of the mTRP transmission configuration message or the first message, or may be a parameter name of one or more resources configured to obtain a TA. For example, if configuration content corresponding to a parameter name 1 (denoted as ResourceforTRP1) is a Resource 1, the terminal device may determine, based on ResourceforTRP1, that the Resource 1 corresponds to a TRP 1. For another example, if configuration content corresponding to a parameter name 2 (denoted as ResourceforTRP2) is a Resource 2, the terminal device may determine, based on ResourceforTRP2, that the Resource 2 corresponds to a TRP 2. Therefore, the terminal device may determine, based on the association relationship between a parameter name and a TRP, that the configuration information of the first resource corresponds to the second TRP, and then determine that a subsequently received TA corresponds to the second TRP.

Optionally, in another implementation, when the configuration information, sent by the network device to the terminal device, of the one or more resources does not include the correspondence between each of the one or more resources and the TRP, that is, from the mTRP transmission configuration message or the first message, the terminal device only knows that the configuration information of the one or more resources is configured, but does not know a specific TRP or TRPs for which the configuration information of the one or more resources is configured, if the terminal device wants to know a TRP corresponding to a subsequently received TA, Manner (1) or Manner (2) described in the following step S602 may be used for implementation. Details are not described herein.

The following mainly uses an example in which the configuration information of the first resource is for the second TRP for illustration.

It may be understood that when the network device sends configuration information of only one resource (that is, the network device configures only one resource for the terminal device), the resource is the first resource. Therefore, the terminal device may send, to the network device by using the first resource, the information used to determine the second TA of the second TRP.

Optionally, when the network device sends configuration information of a plurality of resources (that is, the network device configures a plurality of resources for the terminal device), the network device further needs to send indication information of a to-be-used resource to the terminal device (for example, the following uses indication information of the first resource as an example), to notify the terminal device to subsequently use the first resource to send, to the network device, the information used to determine the second TA of the second TRP. Optionally, when a plurality of resources are configured for the terminal device, the terminal device may autonomously determine to use the first resource in the plurality of resources to send, to the network device, the information used to determine the second TA of the second TRP. For ease of understanding, when the network device sends the configuration information of the plurality of resources, the following mainly uses, for illustration, an example in which the network device notifies, by sending the indication information of the first resource to the terminal device, the terminal device to subsequently use the first resource to send, to the network device, the information used to determine the second TA of the second TRP.

Specifically, in an implementation, the indication information of the first resource may be carried in the mTRP transmission configuration message, that is, when the configuration information of the resources and the information indicating to obtain a TA are carried in one message, in addition to configuring, for the terminal device by using the mTRP transmission configuration message, the plurality of resources and the information indicating to obtain a TA, the network device further needs to specify/indicate the to-be-used first resource for the terminal device, where the first resource corresponds to the second TRP. For example, the indication information of the first resource may be an identifier of the first resource, and the identifier of the first resource is used to uniquely identify the first resource.

In another implementation, the indication information of the first resource may be carried in the second message, that is, when the configuration information of the plurality of resources and the information indicating to obtain a TA are each carried in one message (the configuration information of the plurality of resources is carried in the first message, and the information indicating to obtain a TA is carried in the second message), the second message may further include the indication information of the first resource (or in other words, the second message may indicate the first resource). In other words, in addition to configuring the plurality of resources for the terminal device by using the first message and using the second message to carry the information indicating to obtain a TA, the network device further needs to specify/indicate the to-be-used first resource for the terminal device by using the second message. For example, the indication information of the first resource may be a PDCCH order or a MAC CE. This is not limited herein.

It may be understood that, in the foregoing embodiments of this application, the correspondence between each resource and the identification information of the TRP may be configured in the first message, or may be indicated in the second message. Based on the correspondence, when sending, by using a resource, information used to determine a TA of a TRP, the terminal device may determine, based on a correspondence between the resource and identification information of a TRP, a TRP corresponding to a subsequently received TA.

For ease of description, the following embodiments of this application are mainly described by using an example in which the first resource is used and the first resource correspond to the second TRP, that is, a correspondence between the first resource and the identification information of the second TRP may enable the terminal device to subsequently determine, based on the correspondence between the first resource and the identification information of the second TRP, that a subsequently received second TA is a TA corresponding to the second TRP when the terminal device sends, by using the first resource, the information used to determine the second TA of the second TRP.

For example, in an implementation, the first resource may be a beam (or described as a beam direction). Based on this, the terminal device may send, to the network device on the beam (or in the beam direction), the information used to determine the second TA of the second TRP. For the network device, after receiving, from the terminal device on the beam (or in the beam direction), the information used to determine the second TA of the second TRP, the network device may calculate the second TA based on the received information. Further, the network device may feed back, to the terminal device by using the same beam on which the information is received, information indicating the second TA. Correspondingly, after the terminal device receives, from the network device on the beam, the information indicating the second TA, the terminal device may determine, based on a correspondence between the beam and the identification information of the second TRP, that the TA received on the beam is a TA for the second TRP. It should be noted that the beam or the beam direction in this embodiment of this application is associated with a synchronization signal and physical broadcast channel block (synchronization signal and physical broadcast channel block, SSB) identifier. For example, an SSB #2 is associated with a beam direction of the second TRP. Therefore, the terminal device may determine, based on the SSB #2, the beam direction corresponding to the second TRP. Optionally, in addition to the SSB, the beam or the beam direction may be associated with another type of reference signal, for example, a channel state information reference signal (channel state information reference signal, CSI-RS). A specific type of a reference signal associated with the beam or the beam direction is not limited in this embodiment of this application.

For another example, in another implementation, the first resource may be a random access resource or an SRS resource. The random access resource or the SRS resource is a resource associated with the second TRP. In other words, the mTRP transmission configuration message or the first message indicates that the random access resource or the SRS resource is a random access resource or an SRS resource corresponding to the second TRP. Therefore, after the terminal device sends, to the network device by using the random access resource or the SRS resource associated with the second TRP, the information used to determine the second TA of the second TRP, the terminal device may naturally determine that a subsequently received TA is a TA corresponding to the second TRP.

For example, the configuration information of the first resource is used as an example in this application. The configuration information of the first resource may be configuration information of the random access resource, or configuration information of the SRS resource. For example, the configuration information of the random access resource may include one or more of configurations such as a beam (or referred to as a beam direction), a random access preamble, a time domain resource, a frequency domain resource, a mapping relationship between a beam and a time domain resource as well as a frequency domain resource, the identification information of the second TRP, and identification information of a cell corresponding to the second TRP. For another example, the configuration information of the SRS resource may include one or more of configurations such as a beam (or referred to as a beam direction), a time domain resource, a frequency domain resource, a mapping relationship between a beam and a time domain resource as well as a frequency domain resource, the identification information of the second TRP, and the identification information of the cell corresponding to the second TRP.

It may be understood that the mTRP transmission configuration message may further include at least one of the following configuration information of a second resource corresponding to the second TRP: configuration information of a physical downlink control channel (physical downlink control channel, PDCCH) resource corresponding to the second TRP, configuration information of a physical uplink control channel (physical uplink control channel, PUCCH) resource corresponding to the second TRP, configuration information of a physical uplink shared channel (physical uplink shared channel, PUSCH) resource corresponding to the second TRP and used for semi-persistent channel state information reporting, configuration information of a downlink assignment resource corresponding to the second TRP, configuration information of an uplink grant resource corresponding to the second TRP, configuration information of a beam and/or beam set corresponding to the second TRP, configuration information of a resource corresponding to an uplink reference signal, a TA group (that is, a TAG) identifier corresponding to the second TRP, and other information. This is not limited herein. It may be understood that the terminal device sends, by using a same TA, uplink signals to cells/TRPs that have a same TA group identifier. The beam and/or beam set corresponding to the second TRP in the second resource may include the beam included in the first resource, and the resource corresponding to the uplink reference signal in the second resource may include the resource corresponding to the SRS included in the first resource.

It should be noted that the second resource in this application is understood as a resource corresponding to the second TRP. For an implementation of determining the correspondence between the second resource and the second TRP, refer to the foregoing descriptions of determining the correspondence between the first resource and the second TRP (that is, the configuration information of the second resource may explicitly include the identification information of the second TRP, or the correspondence is determined based on the association relationship between a TRP and a parameter name). Details are not described herein again.

The configuration of the PDCCH resource corresponding to the second TRP may be, for example, a configuration of a control resource set (control resource set, CORESET). The configuration of the beam and/or beam set corresponding to the second TRP may be, for example, some configurations such as a synchronization signal and physical broadcast channel block (synchronization signal and physical broadcast channel block, SSB) identifier, a channel state information reference signal (channel state information reference signal, CSI-RS) identifier, and/or a transmission configuration indication state (transmission configuration indication state, TCI State) identifier. The uplink reference signal configuration corresponding to the second TRP may be, for example, a configuration of one or more SRSs.

S602. The terminal device sends, based on the information indicating to obtain a TA, the information used to determine the second TA of the second TRP to the network device by using the first resource. Correspondingly, the network device receives, from the terminal device on the first resource, the information used to determine the second TA of the second TRP.

In other words, as triggered by the information indicating to obtain a TA, the terminal device may send, to the network device by using the first resource, the information used to determine the second TA of the second TRP.

For example, in an implementation, when the first resource is a random access resource, the information that is sent by the terminal device to the network device and that is used to determine the second TA of the second TRP is a random access preamble, or referred to as a preamble.

Optionally, in another implementation, when the first resource is an SRS resource, the information that is sent by the terminal device to the network device and that is used to determine the second TA of the second TRP is an SRS.

It should be noted that in an implementation, if the terminal device knows the configured one or more resources in a phase of configuring mTRP transmission, and knows the TRP for which each of the one or more resources is configured (that is, the terminal device knows the correspondence between each resource and the identification information of the TRP), the terminal device may determine, based on the correspondence between the resource and the identification information of the TRP, a TRP whose TA is the subsequently received TA. For details, refer to related descriptions in step S601. Details are not described herein again.

Optionally, in another implementation, if the terminal device knows only the configured one or more resources in a phase of configuring mTRP transmission, but does not know the TRP for which each of the one or more resources is configured (that is, the terminal device does not know the correspondence between each resource and the identification information of the TRP), the terminal device may determine, in either of the following two manners, a TRP whose TA is the subsequently received TA:
In (Manner 1), if the configuration information of the one or more resources and the information indicating to obtain a TA are each carried in one message, for example, the configuration information of the one or more resources is carried in the first message, and the information indicating to obtain a TA is carried in the second message, the second information may further carry the correspondence between the first resource and the second TRP. Herein, the correspondence between the first resource and the second TRP includes the indication information of the first resource and the identification information of the second TRP. To be specific, the second message may include a field, and the field indicates an identity related to a TRP (for example, the identification information indicating the second TRP). Therefore, the terminal device may determine, based on the second message, that current sending information used to determine a TA to the network device based on information indicating to obtain a TA is initiated for the second TRP, and the subsequently received TA is a TA corresponding to the second TRP. Optionally, when two TRPs (namely, the first TRP and the second TRP) serve the terminal device, the field in the second message indicates that current TA obtaining is not for the first TRP.

In (Manner 2), when sending, to the terminal device, the information indicating the second TA, the network device may send, to the terminal device, a related identity indicating a TRP (for example, the identification information indicating the second TRP). Correspondingly, the terminal device receives, from the network device, the information indicating the second TA and the identification information of the second TRP. In other words, in addition to feeding back information about the second TA to the terminal device, the network device may further feed back, to the terminal device, the identification information of the second TRP associated with the information about the second TA. Therefore, the terminal device may determine, based on the information indicating the second TA and the identification information of the second TRP that are fed back by the network device, that the received second TA is a TA for the second TRP.

S603. The terminal device receives, from the network device, the information indicating the second TA.

In some feasible implementations, the network device may calculate the second TA based on the received information used to determine the second TA of the second TRP, and feed back, to the terminal device, the information indicating the second TA. Correspondingly, the terminal device receives, from the network device, the information indicating the second TA.

Specifically, in an implementation, if the terminal device obtains the second TA of the second TRP by initiating random access (that is, when the information that is sent by the terminal device to the network device and that is used to determine the second TA of the second TRP is a preamble), the network device may use a random access response message or a MAC CE to carry the information indicating the second TA.

In another implementation, if the information that is sent by the terminal device to the network device and that is used to determine the second TA of the second TRP is an SRS, after calculating the second TA based on the received SRS, the network device may use a MAC CE to carry the information indicating the second TA, and send the MAC CE to the terminal device.

It should be noted that, if in steps S601 and S602, the terminal device knows only the one or more resources configured for the terminal device, but does not know the TRP for which each of the one or more resources is configured (that is, the terminal device does not know the correspondence between each resource and the identification information of the TRP), and the foregoing (Manner 1) does not exist, the network device may determine, in the foregoing (Manner 2), that the received second TA is a TA for the second TRP. In other words, in addition to feeding back the information about the second TA to the terminal device, the network device may further feed back, to the terminal device, the identification information of the second TRP associated with the information about the second TA. Therefore, the terminal device may determine, based on the information indicating the second TA and the identification information of the second TRP that are fed back by the network device, that the received second TA is a TA for the second TRP. To be specific, the random access response message or the MAC CE may include a field, and the field indicates an identity related to a TRP (for example, the identification information indicating the second TRP). Therefore, the terminal device may determine, based on the field in the received random access response message or MAC CE, that the information that is carried in the random access response message or the MAC CE and that indicates the second TA is a TA for the second TRP.

It should be noted that the information indicating the second TA includes either of the following: a value of the second TA, or information about a difference between a value of the first TA and the value of the second TA. It may be understood that, compared with a manner in which the network device directly feeds back the value of the second TA to the terminal device, a manner in which the network device feeds back the information about the difference between the value of the first TA and the value of the second TA to the terminal device can reduce signaling overheads.

For example, it is assumed that the network device calculates a TA (denoted as a TA 2) of the terminal device for a TRP #2. For example, because the network device knows a TA (denoted as a TA 1) of the terminal device for a TRP #1, the network device may send a difference between the TA 2 and the TA 1 to the terminal device by using a MAC CE. After receiving the value (TA 2 - TA 1), the terminal device superimposes the value (TA 2 - TA 1) on the TA 1, to calculate the TA 2. An advantage of this manner is that directly carrying a value of the TA 2 accounts for large signaling overheads, while the indication of (TA 2 - TA 1) may be completed by using fewer bits.

It should be noted that, in this application, the second TA is used by the terminal device to communicate with the second TRP. In other words, the terminal device may communicate with the second TRP by using the second TA.

Optionally, in some feasible implementations, after the terminal device successfully obtains the second TA of the second TRP based on the foregoing steps S601 to S603, the terminal device may release the first resource previously configured in S601. This helps the network device to reclaim the resource in time.

Optionally, in some feasible implementations, after the terminal device successfully obtains the second TA of the second TRP based on the foregoing steps S601 to S603, the terminal device may further update and maintain a TA corresponding to each TRP.

S604. The terminal device and the network device update and maintain a TA corresponding to a TRP.

When receiving the information that is about the second TA and that is indicated by the network device, the terminal device may start a second timer corresponding to the second TRP, or the terminal device may start a second timer corresponding to a TAG to which the second TRP belongs. All TRPs included in one TAG correspond to a same TA. It may be understood that before the second timer expires, the second TA is considered valid.

It may be understood that the terminal device has been maintaining the first TA corresponding to the first TRP, and the terminal device also maintains a first timer corresponding to the first TRP or a TAG to which the first TRP belongs. Before the first timer expires, the first TA is considered valid.

Optionally, in a process in which the terminal device communicates with the second TRP by using the second TA, and/or communicates with the first TRP by using the first TA, the network device may determine, based on an uplink signal sent by the terminal device, whether the first TRP and/or the second TRP need/needs to be adjusted. When determining that a TA needs to be adjusted, the network device may send a TA adjustment command to the terminal device. In addition to indicating a TA value that needs to be adjusted, the command further needs to enable the terminal device to identify a TRP to which the adjustment command needs to be applied.

For ease of understanding, the following mainly uses an example in which the TA that needs to be adjusted is the TA corresponding to the second TRP for illustration. Specifically, the terminal device may identify, in the following two manners, that the adjustment command needs to be applied to the second TRP:
In an implementation, the adjustment command includes the identification information of the second TRP (or identification information of the TAG to which the second TRP belongs) and TA update information corresponding to the second TRP, and the TA update information is used to update the TA corresponding to the second TRP.

In another implementation, when the terminal device knows that the second resource included in the mTRP transmission configuration message is configured for the second TRP, the network device may send the adjustment command to the terminal device by using the second resource. Correspondingly, the terminal device receives the adjustment command from the network device by using the second resource. Therefore, the terminal device may determine, based on the correspondence between the second resource and the second TRP, that the adjustment command is an adjustment command for the second TRP. The adjustment command includes TA update information corresponding to the second TRP, and the TA update information is used to update the TA corresponding to the second TRP.

For example, the second resource is a beam (or described as a beam direction). The network device may send the adjustment command on a beam associated with the second TRP. Correspondingly, the terminal device receives the adjustment command from the network device on the beam or in the beam direction, and may determine, based on a correspondence between a beam and a TRP, that the adjustment command is an adjustment command for the second TRP.

For another example, the second resource is a PDCCH configuration corresponding to the second TRP. The network device may send a downlink assignment message by using a PDCCH corresponding to the second TRP. The downlink assignment message indicates how the terminal device receives the adjustment command. Correspondingly, the terminal device receives the adjustment command from the network device based on the downlink assignment message indicated by the PDCCH, and may determine, based on a correspondence between a PDCCH and a TRP, that the adjustment command is an adjustment command for the second TRP.

It should be noted that after the terminal device receives the adjustment command for the second TRP from the network device, the terminal device needs to start or restart the second timer corresponding to the second TRP.

Correspondingly, if the TA that needs to be adjusted is the TA corresponding to the first TRP, the terminal device may identify, in the following two manners, that the adjustment command needs to be applied to the first TRP:
In an implementation, the adjustment command includes identification information of the first TRP (or identification information of a TAG to which the first TRP belongs) and TA update information corresponding to the first TRP, and the TA update information is used to update the TA corresponding to the first TRP.

In another implementation, in a process in which the terminal device obtains the first TA for communicating with the first TRP, the terminal device has obtained configuration/resource information related to the first TRP. For example, if the terminal device has obtained, from a previous configuration, configuration information of a PDCCH resource associated with the first TRP or configuration information of a beam and/or beam set associated with the first TRP, the network device may send the adjustment command to the terminal device by using a resource associated with the first TRP. Correspondingly, the terminal device receives the adjustment command from the network device by using the resource associated with the first TRP. Therefore, the terminal device may determine, based on a correspondence between the resource associated with the first TRP and the first TRP, that the adjustment command is an adjustment command for the first TRP. The adjustment command includes TA update information corresponding to the first TRP, and the TA update information is used to update the TA corresponding to the first TRP.

For example, the resource associated with the first TRP is a beam (or described as a beam direction). The network device may send the adjustment command on the beam associated with the first TRP. Correspondingly, the terminal device receives the adjustment command from the network device on the beam or in the beam direction, and may determine, based on a correspondence between a beam and a TRP, that the adjustment command is an adjustment command for the first TRP.

For another example, the resource associated with the first TRP is a PDCCH configuration corresponding to the first TRP. The network device may send a downlink assignment message by using a PDCCH corresponding to the first TRP. The downlink assignment message indicates how the terminal device receives the adjustment command. Correspondingly, the terminal device receives the adjustment command from the network device based on the downlink assignment message indicated by the PDCCH, and may determine, based on a correspondence between a PDCCH and a TRP, that the adjustment command is an adjustment command for the first TRP.

It should be noted that after the terminal device receives the adjustment command for the first TRP from the network device, the terminal device needs to start or restart the first timer corresponding to the first TRP.

Optionally, in some feasible implementations, when any timer expires, the terminal device and the network device further need to process a TA maintained by the timer that expires as the TA is invalid.

S605. The terminal device and the network device process an invalid TA.

When the first timer has not expired and the second timer expires, the terminal device performs at least one of the following operations:
1. The terminal device flushes a buffer of a hybrid automatic repeat request HARQ process corresponding to the second TRP.
2. The terminal device releases the PUCCH resource corresponding to the second TRP and/or a resource corresponding to the uplink reference signal corresponding to the second TRP.
3. The terminal device clears a preconfigured downlink assignment resource and uplink grant resource corresponding to the second TRP.
4. The terminal device clears an associated PUSCH resource that corresponds to the second TRP and that is used for semi-persistent channel state information reporting.
5. The terminal device maintains the TA corresponding to the second TRP.
6. The terminal device sends indication information to the first TRP based on the first TA, where the indication information indicates that the TA corresponding to the second TRP is invalid. That the terminal device sends indication information to the first TRP based on the first TA may be further understood as that when a data volume of to-be-sent data in the terminal device is greater than or equal to a first threshold, the terminal device sends the indication information to the first TRP based on the first TA. The indication information indicates that the TA corresponding to the second TRP is invalid. To be specific, when finding that the second TA corresponding to the second TRP is invalid, the terminal device may immediately send the indication information based on the first TA to notify the network device that the TA corresponding to the second TRP is invalid. In this manner, the network device can learn in time that the terminal device is in uplink out-of-synchronization, and the network device may adjust uplink scheduling behavior. For example, the network device subsequently does not perform uplink data scheduling on the second TRP. Alternatively, when finding that the second TA corresponding to the second TRP is invalid, the terminal device may not immediately perform reporting, but wait until the data volume of the to-be-sent data in the terminal device exceeds the first threshold, and then send the indication information based on the first TA to notify the network device that the TA corresponding to the second TRP is invalid. In this manner, when an uplink service volume of the terminal device is large, the network device can be notified in time that the terminal device is in uplink out-of-synchronization, and the network device may subsequently re-indicate the terminal to obtain information about the second TA.

It should be noted that the indication information may be used to trigger the network device to deliver the second message again based on the indication information, to trigger a random access procedure or an SRS transmission procedure, so as to obtain a new TA corresponding to the second TRP.

Optionally, if the one or more resources that are configured in step S601 and that are used to obtain a TA are not released by the terminal device, the terminal device may further send, to the second TRP by using the one or more resources, the information used to determine the second TA of the second TRP. Further, if the information used to determine the second TA of the second TRP is a random access preamble, that is, the terminal initiates a random access procedure, the terminal may send a cause value to the network device in the random access procedure. The cause value indicates that a cause for triggering the random access procedure is to obtain the second TA of the second TRP. For example, the cause value may be carried in a message 3 in a four-step random access procedure.

When the second timer has not expired and the first timer expires, the terminal device performs at least one of the following operations:
1. The terminal device flushes a buffer of a hybrid automatic repeat request HARQ process corresponding to the first TRP.
2. The terminal device releases a PUCCH resource corresponding to the first TRP and/or a resource corresponding to an uplink reference signal corresponding to the first TRP.
3. The terminal device clears a preconfigured downlink assignment resource and uplink grant resource corresponding to the first TRP.
4. The terminal device clears an associated PUSCH resource that corresponds to the first TRP and that is used for semi-persistent channel state information reporting.
5. The terminal device maintains the TA corresponding to the first TRP.
6. The terminal device sends indication information to the second TRP based on the second TA, where the indication information indicates that the TA corresponding to the first TRP is invalid. That the terminal device sends indication information to the second TRP based on the second TA may be further understood as that when the data volume of the to-be-sent data in the terminal device is greater than or equal to a second threshold, the terminal device sends the indication information to the second TRP based on the second TA. The indication information indicates that the TA corresponding to the first TRP is invalid. To be specific, when finding that the first TA corresponding to the first TRP is invalid, the terminal device may immediately send the indication information based on the second TA to notify the network device that the TA corresponding to the first TRP is invalid. In this manner, the network device can learn in time that the terminal device is in uplink out-of-synchronization, and the network device may adjust uplink scheduling behavior. For example, the network device subsequently does not perform uplink data scheduling on the first TRP. Alternatively, when finding that the first TA corresponding to the first TRP is invalid, the terminal device may not immediately perform reporting, but wait until the data volume of the to-be-sent data in the terminal device exceeds the second threshold, and then send the indication information based on the second TA, to notify the network device that the TA corresponding to the first TRP is invalid. In this manner, when an uplink service volume of the terminal device is large, the network device can be notified in time that the terminal device is in uplink out-of-synchronization, and the network device may subsequently re-indicate the terminal to obtain information about the first TA.

The first threshold and the second threshold may be set to be the same or different. This is not limited herein.

It should be noted that the indication information may be used to trigger the network device to deliver the second message again based on the indication information, to trigger a random access procedure or an SRS transmission procedure, so as to obtain a new TA corresponding to the first TRP.

Optionally, if a resource (for example, a third resource is used as an example for illustration) used to obtain the first TA is not released by the terminal device, the terminal device may further send, to the first TRP by using the third resource, information used to determine the first TA of the first TRP. Further, if the information used to determine the first TA of the first TRP is a random access preamble, that is, the terminal initiates a random access procedure, the terminal may send a cause value to the network device in the random access procedure. The cause value indicates that a cause for triggering the random access procedure is to obtain the first TA of the first TRP. For example, the cause value may be carried in a message 3 in a four-step random access procedure.

It should be noted that, when the terminal device determines that a part of TRPs has an invalid TA/is in uplink out-of-synchronization, the terminal device may notify the network device of invalidity information via a TRP with a valid TA/in uplink synchronization, so that the network device restores uplink transmission of the terminal device to a synchronized state in time, and restores an mTRP transmission state, thereby improving reliability and transmission capacity.

When both the first timer and the second timer expire, the terminal device performs at least one of the following operations:
1. The terminal device flushes the buffers of the HARQ processes corresponding to the first TRP and the second TRP.
2. The terminal device releases the PUCCH resources corresponding to the first TRP and the second TRP and/or the resources corresponding to the uplink reference signals corresponding to the first TRP and the second TRP.
3. The terminal device clears the preconfigured downlink assignment resources and uplink grant resources corresponding to the first TRP and the second TRP.
4. The terminal device clears the associated PUSCH resources that correspond to the first TRP and the second TRP and that are used for semi-persistent channel state information reporting.
5. The terminal device maintains the TA corresponding to the first TRP and the TA corresponding to the second TRP.

It should be noted that the terminal device maintains the invalid TA because the TA update information carried in the adjustment command may be an adjustment amount, and the adjustment amount is adjusted based on a previous TA value. Therefore, the terminal device needs to maintain the previous invalid TA. In this application, maintaining may alternatively be understood as saving.

It should be noted that the first TRP and the second TRP that are described in the embodiment shown in FIG. 6 may correspond to a same cell, that is, the first TRP and the second TRP are two TRPs corresponding to a same network device, that is, an intra-cell mTRP scenario.

In this embodiment of this application, in the intra-cell mTRP scenario, when the terminal device has obtained the first TA for communicating with the first TRP, the terminal device can further obtain an initial TA of the second TRP, and update and maintain TAs of a plurality of TRPs. Based on this, the terminal device can send signals to different TRPs at accurate uplink sending time, thereby reducing signal interference on a network side and improving communication reliability.

In another embodiment, the first TRP and the second TRP may correspond to different cells (that is, an inter-cell mTRP scenario). For example, the following uses an example in which the first TRP may correspond to a cell 1 and the second TRP may correspond to a cell 2 for illustration. A network device serving the cell 1 may be denoted as a network device 1, and a network device serving the cell 2 may be denoted as a network device 2. Optionally, in some possible deployment scenarios, when the cell 1 and the cell 2 are two cells of a same base station, that is, the cell 1 and the cell 2 are deployed at a same station, the following network device 1 and network device 2 are a same network device. Correspondingly, the following interaction between the network device 1 and the network device 2 may be understood as an internal implementation of the network device, and is an optional step in embodiments of this application.

For ease of understanding, the following describes TA management in Case a when the first TRP and the second TRP correspond to different cells. To be specific, the terminal device has obtained, in advance in the cell 1 corresponding to the network device 1, the first TA for communicating with the first TRP, and subsequently needs to obtain, in the cell 2 corresponding to the network device 2, the second TA for communicating with the second TRP. The cell 1 corresponding to the network device 1 is a serving cell. The cell 2 corresponding to the network device 2 may be referred to as a secondary cell or an additional cell. A name of the cell 2 is not limited in embodiments of this application. It may be understood that the cell 2 provides an additional communication resource, for example, a beam resource, for the cell 1.

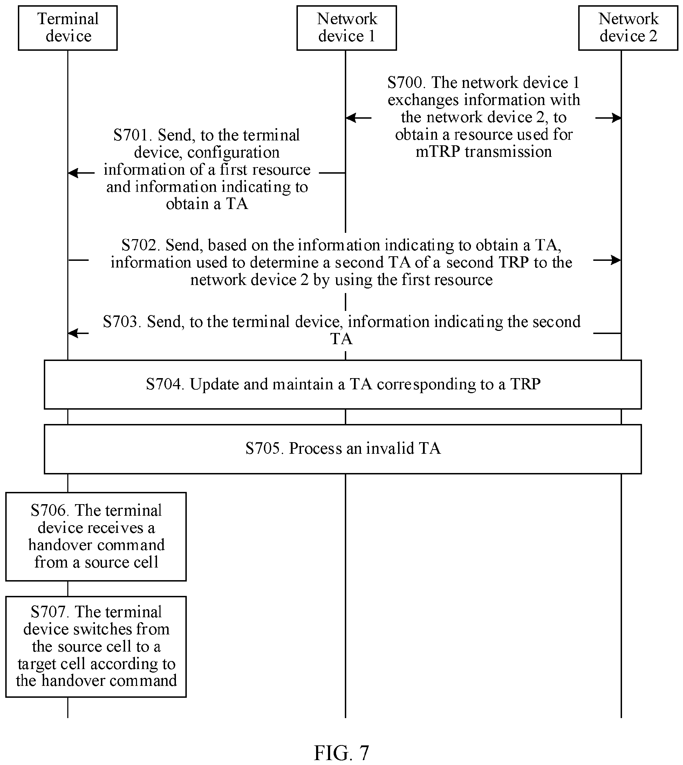

FIG. 7 is another schematic flowchart of a communication method according to an embodiment of this application. Step 700 to step 707 are performed by a terminal device or a network device (for example, a network device 1 or a network device 2), or a chip in the terminal device or the network device. The following uses an example in which the terminal device and the network device perform the method for description.

It should be noted that the terminal device in FIG. 7 has obtained a first TA for communicating with a first TRP, that is, the embodiment shown in FIG. 7 mainly describes TA management in Case a in an inter-cell mTRP scenario.

As shown in FIG. 7, the communication method includes the following step S700 to step S707. Step S700 to step S703 are mainly descriptions of obtaining an initial TA in Case a in the inter-cell mTRP scenario. Step S704 is mainly descriptions of TA update or adjustment in Case a in the inter-cell mTRP scenario. Step S705 is mainly descriptions of behavior or processing after a TA is invalid in Case a in the inter-cell mTRP scenario. Steps S706 and S707 are mainly a solution in an extended scenario.

S700. The network device 1 exchanges information with the network device 2, to obtain a resource used for mTRP transmission.

A serving cell (denoted as a cell 1) in which the terminal device is located is served by the network device 1. When the network device 1 determines, based on a current channel status and a service traffic status, that the network device 1 needs to communicate with the terminal device in an inter-cell mTRP manner with a cell 2 (served by the network device 2), the network device 1 exchanges information with the network device 2, to obtain mTRP transmission configuration information of the cell 2. The mTRP transmission configuration information includes configuration information of a first resource, and the configuration information of the first resource is used by the terminal device to send, to the network device 2 by using the first resource, information used to determine a second TA of a second TRP.

Specifically, step S700 may include: (1) The network device 1 sends a request message to the network device 2. The request message is used to request the cell 2 to assign, to the terminal device, a resource used for mTRP transmission. (2) The network device 2 replies to the network device 1 with a response message. The response message includes a resource that is assigned by the cell 2 to the terminal device and that is used for mTRP transmission. To be specific, the response message includes mTRP transmission configuration information, the mTRP transmission configuration information includes configuration information of one or more resources, and the one or more resources include a first resource.

The configuration information of the first resource may be configuration information of a random access resource, or configuration information of an SRS resource. It may be understood that the configuration information of the random access resource may be configuration information of a resource used for non-contention-based random access. Therefore, the terminal device may subsequently release the configuration after the terminal device obtains a TA by using the non-contention-based random access resource. Optionally, the configuration information of the random access resource may alternatively be configuration information of a resource used for contention-based random access (a common resource). Therefore, the terminal device subsequently may still retain the configuration after obtaining a TA by using the common resource.

It may be understood that step S700 is an optional step. For example, when the cell 1 and the cell 2 are deployed at a same station, that is, when the network device 1 and the network device 2 are a same network device, the information exchange may be implemented as internal information exchange of the device.

S701. The terminal device obtains, from the network device 1, the configuration information of the first resource and information indicating to obtain a TA.

Herein, for understanding of S701, refer to the foregoing descriptions of step S601 in FIG. 6, where only the network device in step S601 needs to be replaced with the network device 1 for understanding. Details are not described herein again.

It should be noted that when the configuration information of the first resource is carried in an mTRP transmission configuration message in step S601, the mTRP transmission configuration message in S701 may be understood as a message generated by the network device 1 based on the mTRP transmission configuration information in S700.

S702. The terminal device sends, based on the information indicating to obtain a TA, the information used to determine the second TA of the second TRP to the network device 2 by using the first resource. Correspondingly, the network device 2 receives, from the terminal device on the first resource, the information used to determine the second TA of the second TRP.

Herein, for understanding of S702, refer to the foregoing descriptions of step S602 in FIG. 6, where only the network device in step S602 needs to be replaced with the network device 2 for understanding. Details are not described herein again. A difference lies in that an identifier indication related to the second TRP, for example, identification information of the second TRP, in S602 may be the identification information of the second TRP or an identifier of the second cell in S702.

S703. The terminal device receives, from the network device 2, information indicating the second TA.

Herein, that the terminal device receives, from the network device 2, information indicating the second TA may be understood as that the network device 2 may directly send the calculated second TA to the terminal device. For example, the information indicating the second TA is carried in a random access response message or a MAC CE.

Optionally, that the terminal device receives, from the network device 2, information indicating the second TA may alternatively be understood as that the network device 2 first notifies the network device 1 of the calculated second TA through inter-station interaction (or an internal implementation of the network device), and then the network device 1 notifies, by using a communication resource of the cell 1, the terminal device of the information indicating the second TA.

For more understanding of receiving, by the terminal device from the network device 1 or the network device 2, the information indicating the second TA, refer to the foregoing descriptions of S603 in FIG. 6, where only the network device in S601 needs to be replaced with the network device 1 or the network device 2 for understanding. Details are not described herein again. A difference lies in that the identifier indication related to the second TRP, for example, the identification information of the second TRP, in S603 may be the identification information of the second TRP or the identifier of the second cell in S703.

It should be noted that, in this application, the second TA is used by the terminal device to communicate with the second TRP. In other words, the terminal device may communicate with the second TRP by using the second TA.

Optionally, in some feasible implementations, after the terminal device successfully obtains the second TA of the second TRP based on the foregoing steps S601 to S603, the terminal device may further update and maintain a TA corresponding to each TRP.

S704. The terminal device and the network device (the network device 1 or the network device 2) update and maintain a TA corresponding to a TRP.

Herein, for understanding of S704, refer to the foregoing descriptions of step S604 in FIG. 6. A difference lies in that the network device 1 is configured to update and maintain the TA (that is, the first TA) corresponding to the first TRP, and the network device 2 is configured to update and maintain the TA (that is, the second TA) corresponding to the second TRP. A difference lies in that the identifier indication related to the second TRP, for example, the identification information of the second TRP, in S604 may be the identification information of the second TRP or the identifier of the second cell in S704.

When the network device 2 maintains the second TA, the network device 2 may directly send an adjustment command to the terminal device. Alternatively, the network device 2 may first notify the network device 1 of the adjustment command through inter-station interaction (or an internal implementation of the network device), and the network device 1 sends the adjustment command to the terminal device by using a communication resource of the cell 1.

Optionally, in some feasible implementations, when any timer expires, the terminal device and the network device further need to process a TA maintained by the timer that expires as the TA is invalid.

S705. The terminal device and the network device (the network device 1 or the network device 2) process an invalid TA.

When the first timer has not expired and the second timer expires, the terminal device performs at least one of the following operations:
1. The terminal device flushes a buffer of a hybrid automatic repeat request HARQ process corresponding to the second TRP.
2. The terminal device releases a PUCCH resource corresponding to the second TRP and/or a resource corresponding to an uplink reference signal corresponding to the second TRP.
3. The terminal device clears a preconfigured downlink assignment resource and uplink grant resource corresponding to the second TRP.
4. The terminal device clears an associated PUSCH resource that corresponds to the second TRP and that is used for semi-persistent channel state information reporting.
5. The terminal device maintains the TA corresponding to the second TRP.
6. The terminal device sends indication information to the first TRP based on the first TA, where the indication information indicates that the TA corresponding to the second TRP is invalid. That the terminal device sends indication information to the first TRP based on the first TA may be further understood as that when a data volume of to-be-sent data in the terminal device is greater than or equal to a first threshold, the terminal device sends the indication information to the first TRP based on the first TA. The indication information indicates that the TA corresponding to the second TRP is invalid. To be specific, when finding that the second TA corresponding to the second TRP is invalid, the terminal device may immediately send the indication information based on the first TA to notify the network device 1 that the TA corresponding to the second TRP is invalid, and the network device 1 may notify the network device 2 of the case. In this manner, the network device 2 can learn in time that the terminal device is in uplink out-of-synchronization, and the network device 2 may adjust uplink scheduling behavior. For example, the network device 2 subsequently does not perform uplink data scheduling on the second TRP. It should be understood that in some possible deployment scenarios, when the cell 1 and the cell 2 are deployed at a same station, that is, when the network device 1 and the network device 2 are a same network device, after the terminal device notifies the network device of the case in which the TA corresponding to the second TRP is invalid, the network device may adjust uplink scheduling behavior in the cell 2 or on the second TRP. Alternatively, when finding that the second TA corresponding to the second TRP is invalid, the terminal device may not immediately perform reporting, but wait until the data volume of the to-be-sent data in the terminal device exceeds the first threshold, and then send the indication information based on the first TA to notify the network device 1 that the TA corresponding to the second TRP is invalid. The network device 1 may directly trigger the terminal device to obtain the second TA, or the network device 1 may notify the network device 2 of the case, and the network device 2 may subsequently re-indicate the terminal to obtain information about the second TA. In this manner, when an uplink service volume of the terminal device is large, the network device 1 or 2 can be notified in time that the terminal device is in uplink out-of-synchronization. It should be understood that, in an intra-station deployment scenario, after the terminal device notifies the network device of the case in which the TA corresponding to the second TRP is invalid, the network device may re-indicate the terminal to obtain information about the second TA.

It should be noted that the indication information may be used to trigger the network device 1 or the network device 2 to deliver a second message again based on the indication information, to trigger a random access procedure or an SRS transmission procedure, so as to obtain a new TA corresponding to the second TRP.

Optionally, if the first resource is not released by the terminal device in step S701, the terminal device may further send, to the second TRP by using the first resource, the information used to determine the second TA of the second TRP. Further, if the information used to determine the second TA of the second TRP is a random access preamble, that is, the terminal initiates a random access procedure, the terminal may send a cause value to the network device 1 in the random access procedure. The cause value indicates that a cause for triggering the random access procedure is to obtain the second TA of the second TRP. For example, the cause value may be carried in a message 3 in a four-step random access procedure.

When the second timer has not expired and the first timer expires, the terminal device performs at least one of the following operations:
1. The terminal device flushes a buffer of a hybrid automatic repeat request HARQ process corresponding to the first TRP.
2. The terminal device releases a PUCCH resource corresponding to the first TRP and/or a resource corresponding to an uplink reference signal corresponding to the first TRP.
3. The terminal device clears a preconfigured downlink assignment resource and uplink grant resource corresponding to the first TRP.
4. The terminal device clears an associated PUSCH resource that corresponds to the first TRP and that is used for semi-persistent channel state information reporting.
5. The terminal device maintains the TA corresponding to the first TRP.
6. The terminal device sends indication information to the second TRP based on the second TA, where the indication information indicates that the TA corresponding to the first TRP is invalid. To be specific, when finding that the first TA corresponding to the first TRP is invalid, the terminal device needs to immediately send the indication information based on the second TA to notify the network device 2 that the TA corresponding to the first TRP is invalid, because a TRP (that is, the first TRP) of a serving cell (that is, the cell 1) performs more functions in inter-cell mTRP transmission. For example, when feeding back measured channel state information to the network device 1, the terminal device performs feedback by using an uplink resource of the serving cell, so that a network side coordinates respective transmission tasks of a plurality of TRPs that perform coordinated transmission. Therefore, when uplink out-of-synchronization occurs on the TRP of the serving cell, to restore uplink sending quickly, the terminal device needs to notify the network device 2 of the case via a TRP with a valid TA. Optionally, the network device 2 may notify the network device 1 of the case.

It should be noted that the indication information may be used to trigger the network device 1 or 2 to deliver a message based on the indication information, to trigger a random access procedure or an SRS transmission procedure, so as to obtain a new TA corresponding to the first TRP.

Optionally, the terminal device may further send a cause value to the network device 2, and the cause value indicates a cause for triggering the random access procedure. For a specific step, refer to the case in which the first timer has not expired and the second timer expires in step S705. Details are not described herein again.

It should be noted that, when the terminal device determines that a part of TRPs has an invalid TA/is in uplink out-of-synchronization, the terminal device may notify the network device of invalidity information via a TRP with a valid TA/in uplink synchronization, so that the network device restores uplink transmission of the terminal device to a synchronized state in time, and restores an mTRP transmission state, thereby improving reliability and transmission capacity.

When both the first timer and the second timer expire, the terminal device performs at least one of the following operations:
1. The terminal device flushes the buffers of the HARQ processes corresponding to the first TRP and the second TRP.
2. The terminal device releases the PUCCH resources corresponding to the first TRP and the second TRP and/or the resources corresponding to the uplink reference signals corresponding to the first TRP and the second TRP.
3. The terminal device clears the preconfigured downlink assignment resources and uplink grant resources corresponding to the first TRP and the second TRP.
4. The terminal device clears the associated PUSCH resources that correspond to the first TRP and the second TRP and that are used for semi-persistent channel state information reporting.
5. The terminal device maintains the TA corresponding to the first TRP and the TA corresponding to the second TRP.

It should be noted that the terminal device maintains the invalid TA because the TA update information carried in the adjustment command may be an adjustment amount, and the adjustment amount is adjusted based on a previous TA value. Therefore, the terminal device needs to maintain the previous invalid TA. In this application, maintaining may alternatively be understood as saving.

Optionally, in a mobility/handover scenario (that is, a cell handover scenario), the first TRP corresponds to a source cell, the second TRP corresponds to a target cell, and the source cell and the target cell are different cells. For example, the source cell is a cell managed by the network device 1, and the target cell is a cell managed by the network device 2. In another example, if in an intra-station deployment scenario, that is, when the network device 1 and the network device 2 are a same network device, the source cell and the target cell are two different cells managed by the same network device. After step S703, the method may further include the following steps:
S706. The terminal device receives a handover command from the source cell.
S707. The terminal device switches from the source cell to the target cell according to the handover command.

The handover command indicates to use the second TA in the target cell, or the handover command indicates to reuse the second TA in the target cell.

Specifically, in a mobility/handover scenario (that is, a cell handover scenario), the network device may hand over the terminal device from the cell 1 to the cell 2 based on a channel measurement result reported by the terminal device, load of each cell, and the like. In an original handover procedure, after the network device sends the handover command to the terminal device, in the process of switching from the cell 1 to the cell 2, the terminal device needs to initiate a random access procedure in the cell 2, to obtain a TA corresponding to the cell 2. However, in this embodiment of this application, if the terminal device has obtained, in advance through steps S700 to S703 or S704, the TA (that is, the second TA) corresponding to the cell 2, after the network device sends the handover command to the terminal device, in the process of switching from the cell 1 to the cell 2, the terminal device does not need to initiate a random access procedure in the cell 2. Therefore, an interruption time caused by the handover can be reduced.

The handover command may carry an indication of a TA that needs to be used by the terminal device in the cell 2, for example, indicating a value of the second TA, or indicating to reuse the second TA in the target cell.

Optionally, if the handover command does not carry the indication of using the second TA in the target cell, the terminal device may compare an identifier of the target cell indicated in the handover command with the identifier of the cell included in the mTRP transmission configuration message included in step S701. If the identifier of the target cell is consistent with the identifier of the cell in the mTRP transmission configuration message, in the process of switching to the target cell, the terminal device may use the TA of the cell in mTRP transmission to perform uplink transmission with the target cell, without a random access procedure.

In this embodiment of this application, in the inter-cell mTRP scenario, when the terminal device has obtained the first TA for communicating with the first TRP, the terminal device may obtain an initial TA of the second TRP, and update and maintain TAs of a plurality of TRPs. Based on this, the terminal device can send signals to different TRPs at accurate uplink sending time, thereby reducing signal interference on a network side and improving communication reliability.

The foregoing embodiments corresponding to FIG. 6 and FIG. 7 respectively describe TA management processes in Cases a of the intra-cell mTRP scenario and the inter-cell mTRP scenario. The following further describes a TA management process in Case b of the intra-cell mTRP scenario or the inter-cell mTRP scenario.

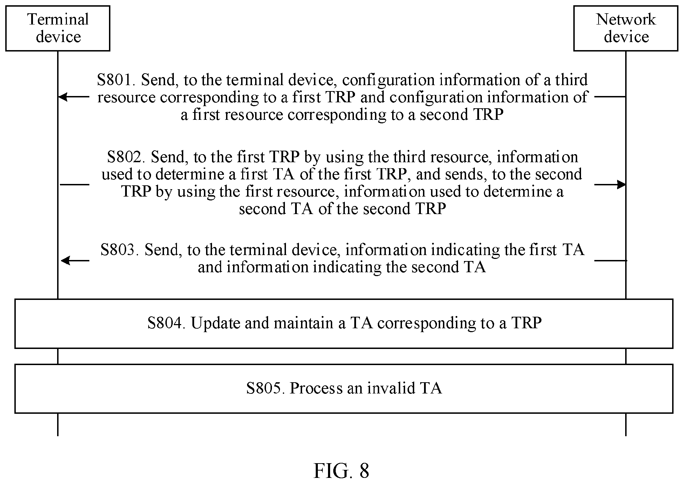

FIG. 8 is another schematic flowchart of a communication method according to an embodiment of this application. Step 801 to step 805 are performed by a terminal device or a network device, or a chip in the terminal device or the network device. The following uses an example in which the terminal device and the network device perform the method for description.

It should be noted that the embodiment shown in FIG. 8 mainly describes TA management in Case b in an intra-cell mTRP scenario.

As shown in FIG. 8, the communication method includes the following step S801 to step S805. Step S801 to step S803 are mainly descriptions of obtaining an initial TA in Case b in the intra-cell mTRP scenario. Step S804 is mainly descriptions of TA update or adjustment in Case b in the intra-cell mTRP scenario. Step S805 is mainly descriptions of behavior or processing after a TA is invalid in Case b in the intra-cell mTRP scenario.

S801. The network device sends, to the terminal device, configuration information of a third resource corresponding to a first TRP and configuration information of a first resource corresponding to a second TRP. Correspondingly, the terminal device receives, from the network device, the configuration information of the third resource corresponding to the first TRP and the configuration information of the first resource corresponding to the second TRP.

In some feasible implementations, the network device sends, to the terminal device, the configuration information of the third resource corresponding to the first TRP and the configuration information of the first resource corresponding to the second TRP. In a possible implementation, the network device sends a handover command to the terminal device, where the handover command includes the configuration information of the third resource corresponding to the first TRP and the configuration information of the first resource corresponding to the second TRP. Correspondingly, that the terminal device receives, from the network device, the configuration information of the third resource corresponding to the first TRP and the configuration information of the first resource corresponding to the second TRP may be understood as that the terminal device receives the handover command from the network device, where the handover command includes the configuration information of the third resource corresponding to the first TRP and the configuration information of the first resource corresponding to the second TRP.

Optionally, that the handover command includes the configuration information of the third resource corresponding to the first TRP and the configuration information of the first resource corresponding to the second TRP may be understood as that the handover command includes mTRP transmission configuration information, and the mTRP transmission configuration information includes the configuration information of the third resource corresponding to the first TRP and the configuration information of the first resource corresponding to the second TRP.

Specifically, in an implementation, that the mTRP transmission configuration information includes the configuration information of the third resource corresponding to the first TRP and the configuration information of the first resource corresponding to the second TRP may be understood as that the mTRP transmission configuration information includes a correspondence between the third resource and the first TRP, and a correspondence between the first resource and the second TRP. The correspondence between the third resource and the first TRP includes the configuration information of the third resource and identification information of the first TRP, and the correspondence between the first resource and the second TRP includes the configuration information of the first resource and identification information of the second TRP.

In another implementation, the mTRP transmission configuration information sent by the network device to the terminal device may not include identification information of a TRP corresponding to a resource, but include only configuration information of the resource. In other words, the terminal device knows only the configured resource (that is, the configuration information of the resource) from the mTRP transmission configuration information in the handover command, but does not know a TRP for which the configured resource is specifically configured. In this case, refer to a manner described in the following step S803, so that the terminal device knows a TRP corresponding to subsequently received TA information. Details are not described herein.

It may be understood that the configuration information of the third resource in this application may include configuration information of a random access resource associated with the first TRP, or may include configuration information of an SRS resource associated with the first TRP. For example, the configuration information of the random access resource associated with the first TRP may include one or more of a beam (or referred to as a beam direction) associated with the first TRP, a random access preamble associated with the first TRP, a time domain resource, a frequency domain resource, a mapping relationship between a beam and a time domain resource as well as a frequency domain resource, and the like. For another example, the configuration information of the resource of the SRS associated with the first TRP may include one or more of configurations such as a beam (or referred to as a beam direction) associated with the first TRP, an SRS associated with the first TRP, a time domain resource, a frequency domain resource, a mapping relationship between a beam and a time domain resource as well as a frequency domain resource, the identification information of the first TRP, and identification information of a cell corresponding to the first TRP.

The configuration information of the first resource in this application may include configuration information of a random access resource associated with the second TRP, or may include configuration information of an SRS resource associated with the second TRP. For example, the configuration information of the random access resource associated with the second TRP may include one or more of a beam (or referred to as a beam direction) associated with the second TRP, a random access preamble associated with the second TRP, a time domain resource, a frequency domain resource, a mapping relationship between a beam and a time domain resource as well as a frequency domain resource, and the like. For another example, the configuration information of the resource of the SRS associated with the second TRP may include one or more of configurations such as a beam (or referred to as a beam direction) associated with the second TRP, an SRS associated with the second TRP, a time domain resource, a frequency domain resource, a mapping relationship between a beam and a time domain resource as well as a frequency domain resource, the identification information of the second TRP, and identification information of a cell corresponding to the second TRP.

It should be noted that, the correspondence between the resource and the identification information of the TRP may enable the terminal device to subsequently determine, based on the correspondence between the resource and the identification information of the TRP, a TRP corresponding to a subsequently received TA when the terminal device sends, by using a resource, information used to determine a TA of a TRP. To be specific, the terminal device may determine, based on the correspondence between the third resource and the first TRP, that a first TA corresponds to the first TRP, and may determine, based on the correspondence between the first resource and the second TRP, that a second TA corresponds to the second TRP.

S802. The terminal device sends, to the first TRP by using the third resource, information used to determine the first TA of the first TRP, and sends, to the second TRP by using the first resource, information used to determine the second TA of the second TRP. Correspondingly, the network device receives, from the terminal device via the first TRP, the information used to determine the first TA of the first TRP, and receives, from the terminal device via the second TRP, the information used to determine the second TA of the second TRP.

For understanding of the "information used to determine the second TA of the second TRP", refer to related descriptions in FIG. 6. Details are not described herein again. For understanding of the "information used to determine the first TA of the first TRP", refer to related descriptions in FIG. 6, where only the second is replaced with the first for understanding. Details are not described herein again.

S803. The terminal device receives, from the network device, information indicating the first TA and information indicating the second TA.

For understanding of the "information indicating the second TA", refer to related descriptions in FIG. 6. Details are not described herein again. For understanding of the "information indicating the first TA", refer to related descriptions in FIG. 6, where only the second is replaced with the first for understanding. Details are not described herein again.

In an implementation, that the terminal device receives, from the network device, information indicating the first TA and information indicating the second TA may be understood as that the terminal device receives a third message from the network device, where the third message includes the information indicating the first TA and the information indicating the second TA. In other words, the information indicating the first TA and the information indicating the second TA may be both carried in one message for sending. In another implementation, that the terminal device receives, from the network device, the information indicating the first TA and the information indicating the second TA may be understood as that the terminal device receives a fourth message from the network device, where the fourth message includes the information indicating the first TA; and the terminal device receives a fifth message from the network device, where the fifth message includes the information indicating the second TA. In other words, the network device may reply with two messages, and each message includes information about a TA corresponding to one TRP.

It should be noted that in an implementation, if the terminal device knows the configured one or more resources in a phase of configuring mTRP transmission, and knows a TRP for which each of the one or more resources is configured (that is, the terminal device knows a correspondence between each resource and identification information of a TRP), the terminal device may determine, based on the correspondence between the resource and the identification information of the TRP, a TRP whose TA is the subsequently received TA. To be specific, the terminal device may determine, based on the correspondence between the third resource and the first TRP, that the first TA corresponds to the first TRP, and determine, based on the correspondence between the first resource and the second TRP, that the second TA corresponds to the second TRP.

Optionally, in another implementation, if the terminal device knows only the configured one or more resources in a phase of configuring mTRP transmission, but does not know the TRP for which each of the one or more resources is configured (that is, the terminal device does not know the correspondence between each resource and the identification information of the TRP), when sending, to the terminal device, the information indicating the first TA and the information indicating the second TA, the network device may further send, to the terminal device, a related identity indicating a TRP, so that the terminal device may determine that the received first TA corresponds to the first TRP, and the received second TA corresponds to the second TRP. To be specific, the third message includes a correspondence between the first TA and the first TRP, and a correspondence between the second TA and the second TRP. The correspondence between the first TA and the first TRP includes the information indicating the first TA and the identification information of the first TRP, and the correspondence between the second TA and the second TRP includes the information indicating the second TA and the identification information of the second TRP. Therefore, the terminal device may determine, based on the correspondence between the first TA and the first TRP, that the first TA corresponds to the first TRP, and determine, based on the correspondence between the second TA and the second TRP, that the second TA corresponds to the second TRP. Alternatively, the fourth message includes the correspondence between the first TA and the first TRP, and the correspondence between the first TA and the first TRP includes the information indicating the first TA and the identification information of the first TRP. The fifth message further includes the correspondence between the second TA and the second TRP, and the correspondence between the second TA and the second TRP includes the information indicating the second TA and the identification information of the second TRP. Therefore, the terminal device may determine, based on the correspondence between the first TA and the first TRP, that the first TA corresponds to the first TRP, and determine, based on the correspondence between the second TA and the second TRP, that the second TA corresponds to the second TRP.

Optionally, in some feasible implementations, after the terminal device successfully obtains the second TA of the second TRP based on the foregoing steps S801 to S803, the terminal device may further update and maintain a TA corresponding to each TRP.

S804. The terminal device and the network device update and maintain a TA corresponding to a TRP.

Herein, for understanding of S804, refer to the foregoing descriptions of step S604 in FIG. 6. Details are not described herein again.

Optionally, in some feasible implementations, when any timer expires, the terminal device and the network device further need to process a TA maintained by the timer that expires as the TA is invalid.

S805. The terminal device and the network device process an invalid TA.

Herein, for understanding of S805, refer to the foregoing descriptions of step S605 in FIG. 6. Details are not described herein again.

In this embodiment of this application, in the intra-cell mTRP scenario, the terminal device may obtain an initial TA of the first TRP and an initial TA of the second TRP at the same time, and update and maintain TAs of a plurality of TRPs. Based on this, the terminal device can send signals to different TRPs at accurate uplink sending time, thereby reducing signal interference on a network side and improving communication reliability.

In another embodiment, Case b of the inter-cell mTRP scenario is described. In the inter-cell mTRP scenario, the first TRP and the second TRP correspond to different cells. Specifically, the first TRP corresponds to a cell 1, and the second TRP corresponds to a cell 2. A network device serving the cell 1 may be denoted as a network device 1, and a network device serving the cell 2 may be denoted as a network device 2. Optionally, in some possible deployment scenarios, the cell 1 and the cell 2 may alternatively be two cells deployed at a same station, that is, the network device 1 and the network device 2 are a same device. Therefore, in the following step descriptions, signaling exchange and a procedure between the two network devices may be understood as an internal implementation of the network device in an intra-station deployment scenario.

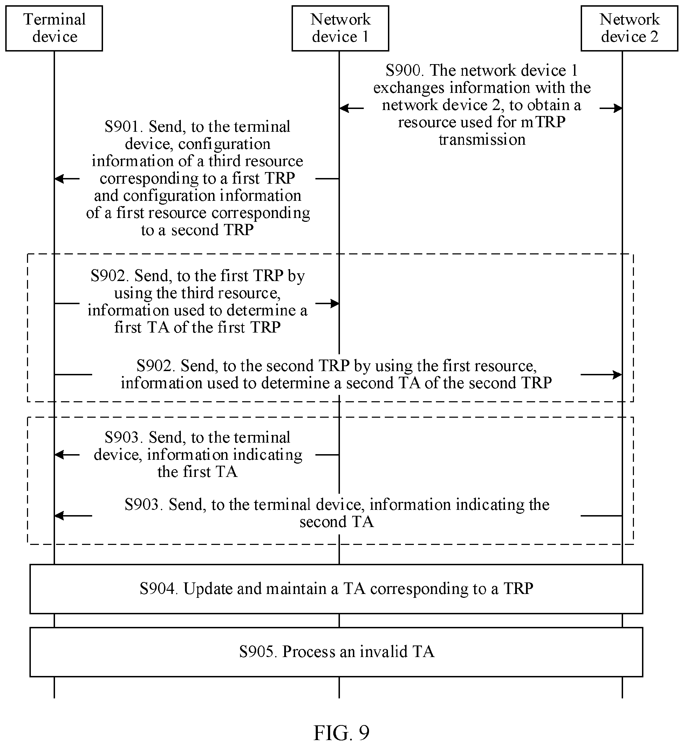

FIG. 9 is another schematic flowchart of a communication method according to an embodiment of this application. Step 900 to step 905 are performed by a terminal device or a network device (for example, a network device 1 or a network device 2), or a chip in the terminal device or the network device. The following uses an example in which the terminal device and the network device perform the method for description.

It should be noted that the embodiment shown in FIG. 9 mainly describes TA management in Case b in an inter-cell mTRP scenario.

As shown in FIG. 9, the communication method includes the following step S900 to step S905. Step S900 to step S903 are mainly descriptions of obtaining an initial TA in Case b in the inter-cell mTRP scenario. Step S904 is mainly descriptions of TA update or adjustment in Case b in the inter-cell mTRP scenario. Step S905 is mainly descriptions of behavior or processing after a TA is invalid in Case b in the inter-cell mTRP scenario.

S900. The network device 1 exchanges information with the network device 2, to obtain a resource used for mTRP transmission.

Herein, for understanding of S900, refer to the foregoing descriptions of step S700 in FIG. 7. Details are not described herein again.

S901. The network device 1 sends, to the terminal device, configuration information of a third resource corresponding to a first TRP and configuration information of a first resource corresponding to a second TRP.

Herein, for understanding of S901, refer to the foregoing descriptions of step S801 in FIG. 8, where only the network device in step S801 needs to be replaced with the network device 1 for understanding. Details are not described herein again.

S902. The terminal device sends, to the first TRP by using the third resource, information used to determine a first TA of the first TRP, and sends, to the second TRP by using the first resource, information used to determine a second TA of the second TRP.

Herein, for understanding of S902, refer to the foregoing descriptions of step S802 in FIG. 8. Details are not described herein again.

S903. The terminal device receives, from the network device (the network device 1 and/or the network device 2), information indicating the first TA and information indicating the second TA.

Herein, that the terminal device receives, from the network device 2, information indicating the first TA and information indicating the second TA may be understood as that the network device 1 first notifies the network device 2 of the calculated first TA through inter-station interaction (or an internal implementation of the network device), and then the network device 2 sends information about the received first TA and information about the calculated second TA to the terminal device by using a communication resource of a cell 2.

That the terminal device receives, from the network device 1, information indicating the first TA and information indicating the second TA may be understood as that the network device 2 first notifies the network device 1 of the calculated second TA through inter-station interaction (or an internal implementation of the network device), and then the network device 1 notifies the terminal device of the received second TA and the calculated first TA by using a communication resource of a cell 1.

That the terminal device receives, from the network device 1 and the network device 2, information indicating the first TA and information indicating the second TA may be understood as that the network device 1 notifies the terminal device of the calculated first TA, and the network device 2 notifies the terminal device of the calculated second TA.

S904. The terminal device and the network device (the network device 1 or the network device 2) update and maintain a TA corresponding to a TRP.

Herein, for understanding of S904, refer to the foregoing descriptions of step S804 in FIG. 8. A difference lies in that the network device 1 is configured to update and maintain the TA (that is, the first TA) corresponding to the first TRP, and the network device 2 is configured to update and maintain the TA (that is, the second TA) corresponding to the second TRP.

S905. The terminal device and the network device (the network device 1 or the network device 2) process an invalid TA.

Herein, for understanding of S905, refer to the foregoing descriptions of step S805 in FIG. 8. A difference lies in that the network device 1 is configured to update and maintain the TA (that is, the first TA) corresponding to the first TRP, and the network device 2 is configured to update and maintain the TA (that is, the second TA) corresponding to the second TRP.

In this embodiment of this application, in the inter-cell mTRP scenario, the terminal device may obtain an initial TA of the first TRP and an initial TA of the second TRP at the same time, and update and maintain TAs of a plurality of TRPs. Based on this, the terminal device can send signals to different TRPs at accurate uplink sending time, thereby reducing signal interference on a network side and improving communication reliability.

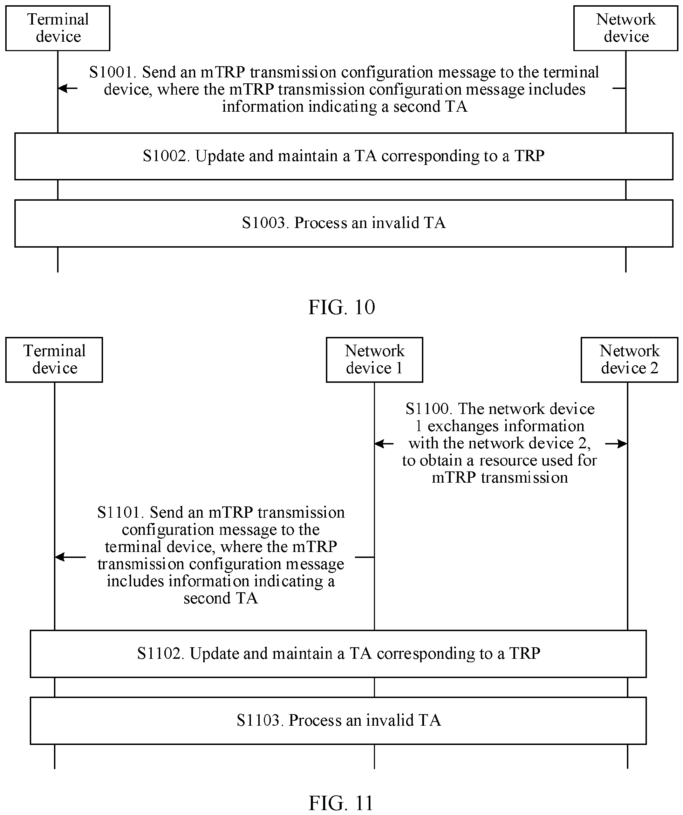

It should be noted that, for TA management in Case a in the intra-cell mTRP scenario, there may also be an implementation shown in FIG. 10. An embodiment corresponding to FIG. 10 may be considered as a parallel solution of the embodiment shown in FIG. 6.

FIG. 10 is another schematic flowchart of a communication method according to an embodiment of this application. Step 1001 to step 1003 are performed by a terminal device or a network device, or a chip in the terminal device or the network device. The following uses an example in which the terminal device and the network device perform the method for description.

It should be noted that the terminal device in FIG. 10 has obtained a first TA for communicating with a first TRP, that is, the embodiment shown in FIG. 10 mainly describes TA management in Case a in another intra-cell mTRP scenario.

As shown in FIG. 10, the communication method includes the following steps S1001 to S1003. Step S1001 is mainly descriptions of obtaining an initial TA in Case a in the intra-cell mTRP scenario, step S1002 is mainly descriptions of TA update or adjustment in Case a in the intra-cell mTRP scenario, and step S1003 is mainly descriptions of behavior or processing after a TA is invalid in Case a in the intra-cell mTRP scenario.

S1001. The network device sends an mTRP transmission configuration message to the terminal device, where the mTRP transmission configuration message includes information indicating a second TA. Correspondingly, the terminal device receives the multi-transmission reception point mTRP transmission configuration message from the network device.

In an example, when the network device learns a distance between the terminal device and a second TRP in a positioning manner, the network device may directly estimate a value of the second TA. Specifically, the network device calculates, based on the distance between the terminal device and the second TRP, a spatial propagation time of an uplink signal sent by the terminal device, to estimate the value of the second TA.

In another example, if the network device knows that a geographical area served by the second TRP is small, the network device may determine that the value of the second TA is 0. Specifically, in the geographic area served by the second TRP, a plurality of terminal devices all send uplink messages by using a TA value of 0. A difference between time at which the uplink signals of the plurality of terminal devices arrive at the second TRP is small, and little interference is generated, so that the network device can still correctly decode the uplink messages sent by the plurality of terminal devices.

In another example, when the network device knows that distances from the terminal device to the first TRP and the second TRP are close, the network device may indicate the terminal device to use the TA of the first TRP to communicate with the second TRP, that is, the value of the second TA is the same as a value of the first TA. For example, the network device may send a specific value to the terminal device, where the value is the same as the value of the first TA. For another example, the network device may send a reuse indication to the terminal device, where the reuse indication indicates the terminal device to reuse the first TA as the second TA.

Generally, the network device may send the mTRP transmission configuration message. The mTRP transmission configuration message includes the information indicating the second TA, the second TA is a TA corresponding to the second TRP, and the second TA is used by the terminal device to communicate with the second TRP. The information indicating the second TA in this application includes any one of the following: the value of the second TA, information about a difference between the value of the first TA and the value of the second TA, or information indicating to reuse another TA.

It should be noted that before step S1001, the network device has sent, to the terminal device, the first TA corresponding to the first TRP, where the first TA is used by the terminal device to communicate with the first TRP. In other words, before step S1001, the terminal device has obtained the first TA for communicating with the first TRP.

Optionally, in an implementation, that the mTRP transmission configuration message includes information indicating a second TA may be understood as that the mTRP transmission configuration message includes identification information of the second TRP and the information indicating the second TA. Therefore, the terminal device may determine, based on the received identification information of the second TRP, that the received second TA is a TA corresponding to the second TRP.

In another implementation, the mTRP transmission configuration message sent by the network device to the terminal device may not include the identification information of the TRP, but includes only the information indicating the second TA, that is, from the mTRP transmission configuration message, the terminal device knows only information about the second TA, but does not know a specific TRP corresponding to the second TA. In this case, if the terminal device wants to know a specific TRP for which the second TA is used, the TRP may be determined based on an association relationship between an mTRP transmission configuration message and a parameter name corresponding to a TRP. For example, an mTRP transmission configuration associated with a parameter name 1 corresponds to a TRP 1, and an mTRP transmission configuration associated with a parameter name 2 corresponds to a TRP 2. Therefore, the terminal device may determine, based on an association relationship between a parameter name and a TRP, that the second TA corresponds to the second TRP. Alternatively, the TRP may be determined based on an association relationship between a resource in an mTRP transmission configuration message and a parameter name corresponding to a TRP. For example, a resource configuration associated with the parameter name 1 corresponds to the TRP 1, and a resource configuration associated with the parameter name 2 corresponds to the TRP 2. Therefore, the terminal device may determine, based on the association relationship between a parameter name and a TRP, that the second TA corresponds to the second TRP.

S1002. The terminal device and the network device update and maintain a TA corresponding to a TRP.

Herein, for understanding of S1002, refer to the foregoing descriptions of step S604 in FIG. 6. Details are not described herein again.

S1003. The terminal device and the network device process an invalid TA.

Herein, for understanding of S1003, refer to the foregoing descriptions of step S605 in FIG. 6. Details are not described herein again.

In this embodiment of this application, in the intra-cell mTRP scenario, when the terminal device has obtained the first TA for communicating with the first TRP, the terminal device may further determine an initial TA of the second TRP based on the information that indicates the second TA and that is carried in the received mTRP transmission configuration message. Further, the terminal device and the network device subsequently may further update and maintain TAs of a plurality of TRPs. Based on this, the terminal device can send signals to different TRPs at accurate uplink sending time, thereby reducing signal interference on a network side and improving communication reliability.

It should be noted that, for TA management in Case a in the inter-cell mTRP scenario, there may also be an implementation shown in FIG. 11. An embodiment corresponding to FIG. 11 may be considered as a parallel solution of the embodiment shown in FIG. 7.

FIG. 11 is another schematic flowchart of a communication method according to an embodiment of this application. Step 1100 to step 1103 are performed by a terminal device or a network device (for example, a network device 1 or a network device 2), or a chip in the terminal device or the network device. The following uses an example in which the terminal device and the network device perform the method for description.

It should be noted that the terminal device in FIG. 11 has obtained a first TA for communicating with a first TRP, that is, the embodiment shown in FIG. 11 mainly describes TA management in Case a in an inter-cell mTRP scenario.

As shown in FIG. 11, the communication method includes the following step S1100 to step S1103. Step S1100 and step S1101 are mainly descriptions of obtaining an initial TA in Case b in the inter-cell mTRP scenario, step S1102 is mainly descriptions of TA update or adjustment in Case b in the inter-cell mTRP scenario, and step S1103 is mainly descriptions of behavior or processing after a TA is invalid in Case b in the inter-cell mTRP scenario.

S1100. The network device 1 exchanges information with the network device 2, to obtain a resource used for mTRP transmission.

Specifically, step S1100 may include: (1) The network device 1 sends a request message to the network device 2. The request message is used to request the cell 2 to assign, to the terminal device, a resource used for mTRP transmission. (2) The network device 2 replies to the network device 1 with a response message. The response message includes a resource that is assigned by the cell 2 to the terminal device and that is used for mTRP transmission. To be specific, the response message includes mTRP transmission configuration information, and the mTRP transmission configuration information includes a second TA.

It may be understood that step S1100 is an optional step. For example, when the cell 1 and the cell 2 are deployed at a same station, that is, when the network device 1 and the network device 2 are a same network device, the information exchange may be implemented as internal information exchange of the device.

S1101. The terminal device obtains, from the network device 1, an mTRP transmission configuration message, where the mTRP transmission configuration message includes information indicating the second TA.

Herein, for understanding of S1101, refer to the foregoing descriptions of step S1001 in FIG. 10, where only the network device in step S1001 needs to be replaced with the network device 1 for understanding. Details are not described herein again.

It should be noted that the mTRP transmission configuration message sent by the network device 1 to the terminal device in step S1101 herein may be understood as a message generated by the network device 1 based on the mTRP transmission configuration information in S1100.

Optionally, in some feasible implementations, after the terminal device successfully obtains the second TA of the second TRP based on the foregoing steps S601 to S603, the terminal device may further update and maintain a TA corresponding to each TRP.

S1102. The terminal device and the network device (the network device 1 or the network device 2) update and maintain a TA corresponding to a TRP.

Herein, for understanding of S1102, refer to the foregoing descriptions of step S704 in FIG. 7. Details are not described herein again.

Optionally, in some feasible implementations, when any timer expires, the terminal device and the network device further need to process a TA maintained by the timer that expires as the TA is invalid.

S1103. The terminal device and the network device (the network device 1 or the network device 2) process an invalid TA.

Herein, for understanding of S1103, refer to the foregoing descriptions of step S705 in FIG. 7. Details are not described herein again.

In this embodiment of this application, in the inter-cell mTRP scenario, when the terminal device has obtained the first TA for communicating with the first TRP, the terminal device may further determine an initial TA of the second TRP based on the information that indicates the second TA and that is carried in the received mTRP transmission configuration message. Further, the terminal device and the network device subsequently may further update and maintain TAs of a plurality of TRPs. Based on this, the terminal device can send signals to different TRPs at accurate uplink sending time, thereby reducing signal interference on a network side and improving communication reliability.

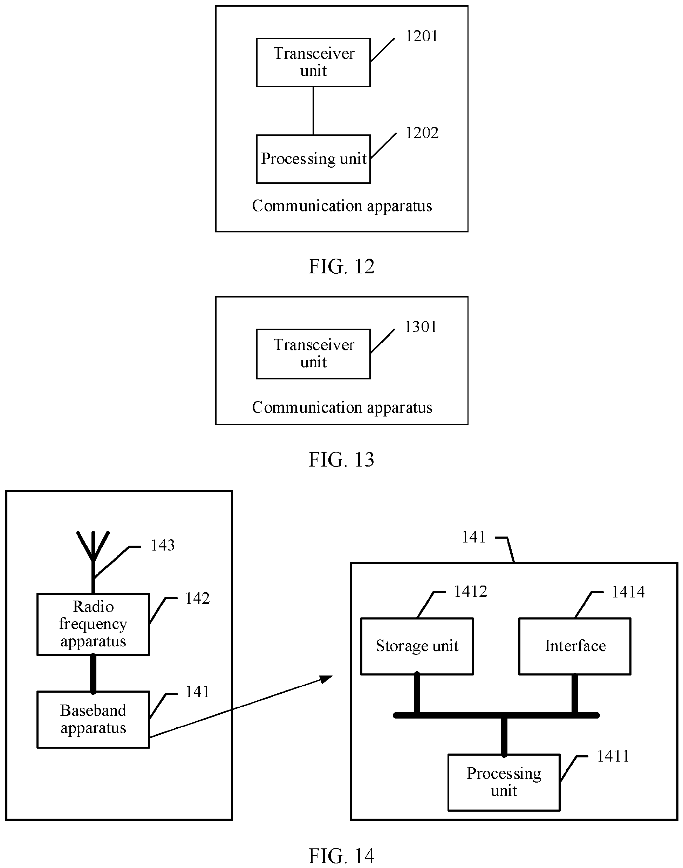

The following describes, in detail with reference to FIG. 12 to FIG. 15, the communication apparatus provided in this application.

FIG. 12 is a diagram of a structure of a communication apparatus according to an embodiment of this application. The communication apparatus shown in FIG. 12 may be configured to perform a part of or all functions of the terminal device in the method embodiments described in FIG. 5 to FIG. 11. The apparatus may be a terminal device, an apparatus in the terminal device, or an apparatus that can be used in combination with the terminal device. The communication apparatus may alternatively be a chip system. The communication apparatus shown in FIG. 12 may include a transceiver unit 1201 and a processing unit 1202. The processing unit 1202 is configured to perform data processing. The transceiver unit 1201 is integrated with a receiving unit and a sending unit. The transceiver unit 1201 may alternatively be referred to as a communication unit. Alternatively, the transceiver unit 1201 may be divided into a receiving unit and a sending unit. The following processing unit 1202 and transceiver unit 1201 are similar thereto, and the descriptions are not repeated below.

In an implementation:
The transceiver unit 1201 is configured to obtain, from a network device, configuration information of a first resource and information indicating to obtain a TA.

The processing unit 1202 is configured to send, based on the information indicating to obtain a TA, information used to determine a second TA of a second TRP to the network device via the transceiver unit 1201 by using the first resource.

The transceiver unit 1201 is configured to receive, from the network device, information indicating the second TA. The second TA is used by the terminal device to communicate with the second TRP.

In another implementation:
The transceiver unit 1201 is configured to receive, from a network device, configuration information of a third resource corresponding to a first TRP and configuration information of a first resource corresponding to a second TRP.

The transceiver unit 1201 is configured to: send, to the first TRP by using the third resource, information used to determine a first TA of the first TRP, and send, to the second TRP by using the first resource, information used to determine a second TA of the second TRP.

The transceiver unit 1201 is configured to receive, from the network device, information indicating the first TA and information indicating the second TA.

In another implementation:
The transceiver unit 1201 is configured to receive a multi-transmission reception point mTRP transmission configuration message from a network device. The mTRP transmission configuration message includes information indicating a second TA, the second TA is a TA corresponding to a second TRP, and the information indicating the second TA includes either of the following: a value of the second TA, or information about a difference between a value of a first TA and the value of the second TA.

The processing unit 1202 is configured to communicate with the second TRP by using the second TA.

For another possible implementation of the communication apparatus, refer to related descriptions of functions of the terminal device in the method embodiments corresponding to FIG. 5 to FIG. 11. Details are not described herein again.

FIG. 13 is a diagram of a structure of another communication apparatus according to an embodiment of this application. The communication apparatus shown in FIG. 13 may be configured to perform a part of or all functions of the network device in the method embodiments described in FIG. 5 to FIG. 11. The apparatus may be a network device, an apparatus in the network device, or an apparatus that can be used in combination with the network device. The communication apparatus may alternatively be a chip system. The communication apparatus shown in FIG. 13 may include a transceiver unit 1301.

In an implementation:
The transceiver unit 1301 is configured to send a first timing advance TA corresponding to a first transmission reception point TRP to a terminal device. The first TA is used by the terminal device to communicate with the first TRP.

The transceiver unit 1301 is configured to send, to the terminal device, configuration information of a first resource and information indicating to obtain a TA.

The transceiver unit 1301 is configured to receive information that is sent by the terminal device by using the first resource in response to the information indicating to obtain a TA and that is used to determine a second TA of a second TRP.

The transceiver unit 1301 is configured to send, to the terminal device, information indicating the second TA. The second TA is used by the terminal device to communicate with the second TRP.

In another implementation:
The transceiver unit 1301 is configured to send, to a terminal device, configuration information of a third resource corresponding to a first TRP and configuration information of a first resource corresponding to a second TRP.

The transceiver unit 1301 is configured to: receive, from the terminal device via the first TRP, information used to determine a first TA of the first TRP, and receive, from the terminal device via the second TRP, information used to determine a second TA of the second TRP.

The transceiver unit 1301 is configured to send, to the terminal device, information indicating the first TA and information indicating the second TA.

In another implementation:
The transceiver unit 1301 is configured to send a first timing advance TA corresponding to a first transmission reception point TRP to a terminal device. The first TA is used by the terminal device to communicate with the first TRP.

The transceiver unit 1301 is configured to send a multi-transmission reception point mTRP transmission configuration message to the terminal device. The mTRP transmission configuration message includes information indicating a second TA, the second TA is a TA corresponding to a second TRP, the information indicating the second TA includes either of the following: a value of the second TA, or information about a difference between a value of the first TA and the value of the second TA, and the second TA is used by the terminal device to communicate with the second TRP.

For another possible implementation of the communication apparatus, refer to related descriptions of functions of the network device in the method embodiments corresponding to FIG. 5 to FIG. 11. Details are not described herein again.

FIG. 14 is a diagram of a structure of another communication apparatus according to an embodiment of this application. As shown in FIG. 14, the communication apparatus may be the access network device described in embodiments of this application. The access network device includes a baseband apparatus 141, a radio frequency apparatus 142, and an antenna 143. In an uplink direction, the radio frequency apparatus 142 receives, via the antenna 143, information sent by a terminal device, and sends, to the baseband apparatus 141 for processing, the information sent by the terminal device. In a downlink direction, the baseband apparatus 141 processes the information of the terminal device and sends information to the radio frequency apparatus 142, and the radio frequency apparatus 142 processes the information of the terminal device and then sends information to the terminal device via the antenna 143.

The baseband apparatus 141 includes one or more processing units 1411, a storage unit 1412, and an interface 1414. The processing unit 1411 is configured to support the network device in performing functions of the network device in the foregoing method embodiments. The storage unit 1412 is configured to store a software program and/or data. The interface 1414 is configured to exchange information with the radio frequency apparatus 142. The interface includes an interface circuit, configured to input and output information. In an implementation, the processing unit is an integrated circuit, for example, one or more application-specific integrated circuits (application-specific integrated circuit, ASIC), one or more digital signal processors (digital signal processor, DSP), one or more field programmable gate arrays (field programmable gate array, FPGA), or a combination of such integrated circuits. These integrated circuits may be integrated to form a chip. The storage unit 1412 and the processing unit 1411 may be located in a same chip, that is, an on-chip storage element. Alternatively, the storage unit 1412 may be in a different chip from the processing unit 1411, that is, an off-chip storage element. The storage unit 1412 may be one memory, or may be a collective name of a plurality of memories or storage elements.

The access network device may implement a part of or all steps in the foregoing method embodiments in a form of scheduling a program by one or more processing units. For example, corresponding functions of the network device in FIG. 5 to FIG. 11 are implemented. The one or more processing units may support radio access technologies of a same standard, or may support radio access technologies of different standards.

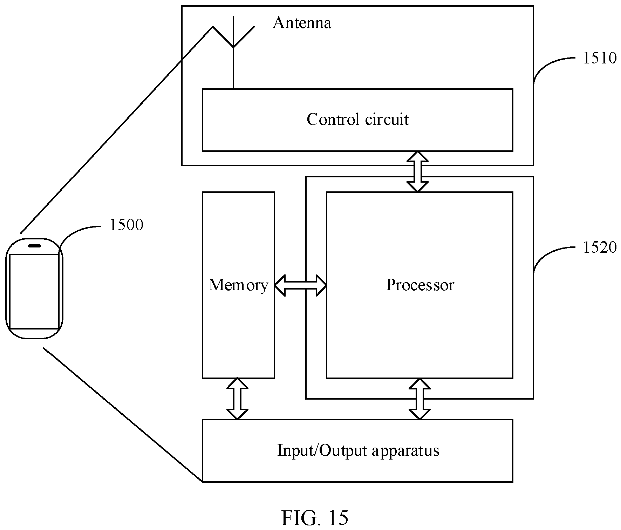

FIG. 15 is a diagram of a structure of another communication apparatus according to an embodiment of this application. As shown in FIG. 15, the communication apparatus may be the terminal device described in embodiments of this application. For ease of description, FIG. 15 shows only main components of a terminal device 1500. As shown in FIG. 15, the terminal device 1500 includes a processor, a memory, a control circuit, an antenna, and an input/output apparatus. The processor is mainly configured to: process a communication protocol and communication data, control the entire terminal device 1500, execute a software program, and process data of the software program. The memory is mainly configured to store the software program and data. The control circuit is mainly configured to convert a baseband signal and a radio frequency signal and process the radio frequency signal. The antenna is mainly configured to receive and send radio frequency signals in an electromagnetic wave form. The input/output apparatus, for example, a touchscreen, a display, a microphone, or a keyboard, is mainly configured to receive data input by a user and output data to the user.

For example, the terminal device 1500 is a mobile phone. After the terminal device 1500 is powered on, the processor may read a software program in a storage unit, explain and execute instructions of the software program, and process data of the software program. When data needs to be sent wirelessly, the processor performs baseband processing on the to-be-sent data, and then outputs a baseband signal to the control circuit. The control circuit performs radio frequency processing on the baseband signal, and then sends a radio frequency signal to outside in the electromagnetic wave form via the antenna. When data is sent to the terminal device 1500, the control circuit receives a radio frequency signal via the antenna, converts the radio frequency signal into a baseband signal, and outputs the baseband signal to the processor. The processor converts the baseband signal into data and processes the data.

A person skilled in the art may understand that, for ease of description, FIG. 15 shows only one memory and one processor. In some embodiments, the terminal device 1500 may include a plurality of processors and memories. The memory may alternatively be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to: control the entire terminal device 1500, execute the software program, and process the data of the software program. Functions of the baseband processor and the central processing unit are integrated into the processor in FIG. 15. A person skilled in the art may understand that the baseband processor and the central processing unit may alternatively be independent processors, and are interconnected by using a technology such as a bus. The terminal device 1500 may include a plurality of baseband processors to adapt to different network standards. The terminal device 1500 may include a plurality of central processing units to enhance a processing capability of the terminal device 1500. Components of the terminal device 1500 may be connected by using various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the storage unit in a form of a software program, and the processor executes the software program to implement a baseband processing function.

In an example, the antenna with a transceiver function and the control circuit may be considered as a transceiver unit 1510 of the terminal device 1500, and the processor with a processing function may be considered as a processing unit 1520 of the terminal device 1500. As shown in FIG. 15, the terminal device 1500 includes the transceiver unit 1510 and the processing unit 1520. The transceiver unit may alternatively be referred to as a transceiver, a transceiver machine, a transceiver apparatus, or the like. Optionally, a component configured to implement a receiving function in the transceiver unit 1510 may be considered as a receiving unit, and a component configured to implement a sending function in the transceiver unit 1510 may be considered as a sending unit. In other words, the transceiver unit 1510 includes the receiving unit and the sending unit. For example, the receiving unit may alternatively be referred to as a receiver, a receive machine, or a receiving circuit, and the sending unit may alternatively be referred to as a transmitter, a transmit machine, or a transmitting circuit.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, units and steps of the examples described in combination with embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. A part of or all units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or a part contributing to a conventional technology, or a part of the technical solutions may be implemented in a form of a software product. The computer software product is stored in a storage medium, and includes several instructions for instructing a computer device (which may be a personal computer, a server, or a network device) to perform all or a part of steps of the methods in embodiments of this application. The computer-readable storage medium may be any usable medium that can be accessed by a computer. For example, the computer-readable medium may include but is not limited to a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk drive or another optical disk storage, a magnetic disk storage medium or another magnetic storage device, or any other medium that can carry or store expected program code in a form of instructions or a data structure and that can be accessed by a computer. In addition, for example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method is applicable to a terminal device that has obtained a first timing advance TA for communicating with a first transmission reception point TRP, and the method comprises:
obtaining, from a network device, configuration information of a first resource and information indicating to obtain a TA;
sending, based on the information indicating to obtain a TA, information used to determine a second TA of a second TRP to the network device by using the first resource; and
receiving, from the network device, information indicating the second TA, wherein the second TA is used by a terminal device to communicate with the second TRP.

2. The method according to claim 1, wherein the obtaining, from a network device, configuration information of a first resource and information indicating to obtain a TA comprises:
obtain a multi-transmission reception point mTRP transmission configuration message from the network device, wherein the mTRP transmission configuration message comprises the configuration information of the first resource and the information indicating to obtain a TA.

3. The method according to claim 1 or 2, wherein the obtaining, from a network device, configuration information of a first resource and information indicating to obtain a TA comprises:
obtaining a multi-transmission reception point mTRP transmission configuration message from the network device, wherein the mTRP transmission configuration message comprises a correspondence between the first resource and the second TRP and the information indicating to obtain a TA, and the correspondence between the first resource and the second TRP comprises the configuration information of the first resource and identification information of the second TRP; and
the method further comprises:
determining, based on the correspondence between the first resource and the second TRP, that the second TA corresponds to the second TRP.

4. The method according to claim 1, wherein the obtaining, from a network device, configuration information of a first resource and information indicating to obtain a TA comprises:
receiving a first message from the network device, wherein the first message comprises configuration information of one or more resources, and the one or more resources comprise the first resource; and
receiving a second message from the network device, wherein the second message comprises the information indicating to obtain a TA.

5. The method according to claim 4, wherein the first message is an mTRP transmission configuration message, and the second message is a physical downlink control channel order PDCCH order.

6. The method according to claim 4 or 5, wherein the first message further comprises a correspondence between the first resource and the second TRP, and the correspondence between the first resource and the second TRP comprises the configuration information of the first resource and identification information of the second TRP; and
the method further comprises:
determining, based on the correspondence between the first resource and the second TRP, that the second TA corresponds to the second TRP.

7. The method according to claim 4 or 5, wherein the second message further comprises a correspondence between the first resource and the second TRP, and the correspondence between the first resource and the second TRP comprises indication information of the first resource and identification information of the second TRP; and
the method further comprises:
determining, based on the correspondence between the first resource and the second TRP, that the second TA corresponds to the second TRP.

8. The method according to claim 1, 2, 4, or 5, wherein the receiving, from the network device, information indicating the second TA comprises:
receiving a correspondence between the second TA and the second TRP from the network device, wherein the correspondence between the second TA and the second TRP comprises the information indicating the second TA and identification information of the second TRP; and
the method further comprises:
determining, based on the correspondence between the second TA and the second TRP, that the second TA corresponds to the second TRP.

9. The method according to any one of claims 1 to 8, wherein the first resource is any one of the following:
a beam, a random access resource, or a sounding reference signal SRS resource.

10. The method according to any one of claims 1 to 9, wherein the method further comprises:
receive an adjustment command from the network device, wherein the adjustment command comprises the identification information of the second TRP and TA update information corresponding to the second TRP, and the TA update information is used to update the second TA.

11. The method according to any one of claims 2, 3, or 5 to 9, wherein the mTRP transmission configuration information further comprises at least one of the following configuration information of a second resource corresponding to the second TRP:
configuration information of a physical downlink control channel PDCCH resource, configuration information of a physical uplink control channel PUCCH resource, configuration information of a physical uplink shared channel PUSCH resource used for semi-persistent channel state information reporting, configuration information of a downlink assignment resource, configuration information of an uplink grant resource, configuration information of a beam and/or a beam set, and configuration information of a resource corresponding to an uplink reference signal.

12. The method according to claim 11, wherein the method further comprises:
receiving an adjustment command from the network device by using the second resource, wherein the adjustment command comprises TA update information corresponding to the second TRP, and the TA update information is used to update the second TA; and
determining, based on a correspondence between the second resource and the second TRP, that the adjustment command corresponds to the second TRP, wherein the correspondence between the second resource and the second TRP comprises configuration information of the second resource and the identification information of the second TRP.

13. The method according to claim 11 or 12, wherein the first TRP corresponds to a first timer, and the second TRP corresponds to a second timer; and
the method further comprises:
when the first timer has not expired and the second timer expires, performing at least one of the following operations:
flushing a buffer of a hybrid automatic repeat request HARQ process corresponding to the second TRP;
releasing the PUCCH resource corresponding to the second TRP and/or the resource corresponding to the uplink reference signal corresponding to the second TRP;
clearing a preconfigured downlink assignment resource and uplink grant resource corresponding to the second TRP;
clearing an associated PUSCH resource that corresponds to the second TRP and that is used for semi-persistent channel state information reporting;
maintaining the second TA; and
sending indication information to the network device based on the first TA, wherein the indication information indicates that the second TA is invalid.

14. The method according to claim 13, wherein the sending indication information to the network device based on the first TA comprises:
when a data volume of to-be-sent data is greater than or equal to a first threshold, sending the indication information to the network device based on the first TA.

15. The method according to any one of claims 1 to 14, wherein the first TRP and the second TRP correspond to a same cell, or the first TRP and the second TRP correspond to different cells.

16. The method according to claim 15, wherein the first TRP and the second TRP correspond to different cells, the first TRP corresponds to a source cell, and the second TRP corresponds to a target cell; and
after the receiving, from the network device, information indicating the second TA, the method further comprises:
receiving a handover command from the source cell; and
switching from the source cell to the target cell according to the handover command, wherein the handover command indicates to use the second TA in the target cell.

17. A communication method, wherein the method is applied to a network device and comprises:
sending a first timing advance TA corresponding to a first transmission reception point TRP to a terminal device, wherein the first TA is used by the terminal device to communicate with the first TRP;
sending, to the terminal device, configuration information of a first resource and information indicating to obtain a TA;
receiving information that is sent by the terminal device by using the first resource in response to the information indicating to obtain a TA and that is used to determine a second TA of a second TRP; and
sending, to the terminal device, information indicating the second TA, wherein the second TA is used by the terminal device to communicate with the second TRP.

18. The method according to claim 17, wherein the sending, to the terminal device, configuration information of a first resource and information indicating to obtain a TA comprises:
sending a multi-transmission reception point mTRP transmission configuration message to the terminal device, wherein the mTRP transmission configuration message comprises the configuration information of the first resource and the information indicating to obtain a TA.

19. The method according to claim 17 or 18, wherein the sending, to the terminal device, configuration information of a first resource and information indicating to obtain a TA comprises:
send a multi-transmission reception point mTRP transmission configuration message to the terminal device, wherein the mTRP transmission configuration message comprises a correspondence between the first resource and the second TRP and the information indicating to obtain a TA, and the correspondence between the first resource and the second TRP comprises the configuration information of the first resource and identification information of the second TRP.

20. The method according to claim 17, wherein the sending, to the terminal device, configuration information of a first resource and information indicating to obtain a TA comprises:
sending a first message to the terminal device, wherein the first message comprises configuration information of one or more resources, and the one or more resources comprise the first resource; and
sending a second message to the terminal device, wherein the second message comprises the information indicating to obtain a TA.

21. The method according to claim 20, wherein the first message is an mTRP transmission configuration message, and the second message is a physical downlink control channel order PDCCH order.

22. The method according to claim 20 or 21, wherein the first message further comprises a correspondence between the first resource and the second TRP, and the correspondence between the first resource and the second TRP comprises the configuration information of the first resource and identification information of the second TRP.

23. The method according to claim 20 or 21, wherein the second message further comprises a correspondence between the first resource and the second TRP, and the correspondence between the first resource and the second TRP comprises the indication information of the first resource and identification information of the second TRP.

24. The method according to claim 17, 18, 20, or 21, wherein the sending, to the terminal device, information indicating the second TA comprises:
sending a correspondence between the second TA and the second TRP to the terminal device, wherein the correspondence between the second TA and the second TRP comprises the information indicating the second TA and identification information of the second TRP.

25. The method according to any one of claims 17 to 24, wherein the first resource is any one of the following:
a beam, a random access resource, or a sounding reference signal SRS resource.

26. A communication apparatus, comprising a unit or a module configured to perform the method according to any one of claims 1 to 16.

27. A communication apparatus, comprising a unit or a module configured to perform the method according to any one of claims 17 to 25.

28. A communication apparatus, comprising:
one or more processors, one or more transceivers, and one or more memories, wherein
the one or more memories are configured to store a computer program, and the one or more processors and the one or more transceivers are configured to execute the computer program stored in the one or more memories, to enable the communication apparatus to perform the method according to any one of claims 1 to 16 or the method according to any one of claims 17 to 25.

29. A computer-readable storage medium, wherein the storage medium stores a computer program or instructions, and when the computer program or the instructions are executed by a computer, the method according to any one of claims 1 to 16 or claims 17 to 25 is implemented.

30. A computer program product, comprising computer program code, wherein when the computer program code is run on a computer, the method according to any one of claims 1 to 16 or claims 17 to 25 is implemented.
